(19) Europäisches Patentamt

European Patent Office

Office européen des brevets

(11) EP 1 327 976 B1

(12) **EUROPEAN PATENT SPECIFICATION**

(45) Date of publication and mention
of the grant of the patent:
**27.10.2004 Bulletin 2004/44**

(51) Int Cl.⁷: **G10L 15/20**

(21) Application number: **01130729.5**

(22) Date of filing: **21.12.2001**

(54) **Method and system for recognition of speech in a noisy environment**

Verfahren und Vorrichtung zur Erkennung von verrauschten Sprachsignalen

Méthode et dispositif pour la reconnaissance de parole en présence de bruit

(84) Designated Contracting States:
**DE GB**

(43) Date of publication of application:
**16.07.2003 Bulletin 2003/29**

(73) Proprietor: **Ruwisch, Dietmar, Dr.**
**12557 Berlin (DE)**

(72) Inventor: **Ruwisch, Dietmar, Dr.**
**12557 Berlin (DE)**

(74) Representative: **Betten & Resch**
**Patentanwälte,**
**Theatinerstrasse 8**
**80333 München (DE)**

(56) References cited:
**EP-A- 1 154 405**          **WO-A-00/75918**
**US-A- 6 138 094**

**Description**

BACKGROUND OF THE INVENTION

1. Field of the Invention

The present invention relates to speech recognition in a noisy environment, and more particulary to a robust speech recognition method and system.

2. Description of the related Art

In recent years the technologies of automatic speech recognition (ASR) have made remarkable progress due to increasing performance of computer and in particular digital signal processing systems and mass memory as well as the development of advanced algorithms. Most ASR systems are designed for office applications running on a PC in a quiet environment. For "real world" applications those systems are often insufficient, since in a typical embedded control application there is not enough computational power and memory available. Furthermore, such applications suffer from noise and acoustic echoes which are big problems in embedded ASR.

Many different methods are known which try to cope with the problem of noise and disturbances in speech signals. Noise reduction methods based on filters are known which reduce additive noise from a noisy speech signal. Other systems face the problem of e.g. acoustic echoes in the noisy speech signal.

In EP1091349 a noise reduction system is described, which efficiently removes disturbing noise from a speech signal by using a neural network to define a filter function. However, with decreasing signal-to-noise ratio it also causes degradations of the speech signal, which are not known to the ASR system and thus may lead to decreasing recognition results.

Kim et al.: Real-Time Noise Suppression Based on Diffusive Gain Factors, ICSP 2001, pp. 703-708, Taejon, Korea, August 2001 have shown that such a noise reduction system used as a pre-processing device in an ASR system can improve the recognition rate in case of noisy input, e.g. inside a running motor vehicle.

In DE 19521258 it is suggested to pick up disturbing sounds like noise and acoustic echoes with a separate microphone. The disturbances are than subtracted in the course of feature extraction. This is a costly solution since an additional acoustic path is needed in the system. Moreover, in many situations this method does not apply since it is impossible to get a signal with noise only, i.e. free of the wanted speech signal.

In such a case, when the noise cannot be removed from the signal, an alternative idea is to include disturbed speech into the database of the speech engine. In WO 96/27185 a method is described in which noise is artificially added to the clean speech utterances usually used for database generation. Thus it is not needed to record naturally disturbed data. However, it is nearly impossible to foresee all kinds of possible disturbances. Moreover, still a large database is needed to store the plurality of modified utterances.

Other approaches work under noisy conditions although the reference data are recorded under noise-free conditions. In J. Ming and F. J. Smith: A probabilistic union model for sub-band based robust speech recognition, ICASSP 2000, pp. 1787-1790, Istanbul, Turkey, June 2000, a statistical model for combining sub-band observations for robust speech recognition is described, in which several Hidden Markov models (HMMs) working on sub-bands of the speech spectrum are used. In this case, noise is expected to disturb speech only in distinct sub-bands, thus HMMs working on low-noise sub-bands are still able to yield good recognition results. However, for each sub-band a separate HMM has to be used which must be stored in a database resulting in high performance and memory requirements for such an ASR.

In Barker et al.: Robust ASR Based on Clean Speech Models: An Evaluation of Missing Data Techniques for Connected Digit Recognition in Noise, Eurospeech 2001, pp. 213-216 Denmark, September 2001 another method is described, which uses masking techniques disregarding spectral or temporal parts of the speech signal: masks are calculated with the help of autocorrelation matrices in order to judge spectral or temporal regions of the speech signal as reliable or unreliable. However, such classification techniques are often unreliable and require high computational power and memory.

EP-A-1 154 405 discloses a speech recognition method in environments with fluctuating noise levels. When a noise transition has been detected, the parametrization phase includes a step of matching the parameters to the new noise model.

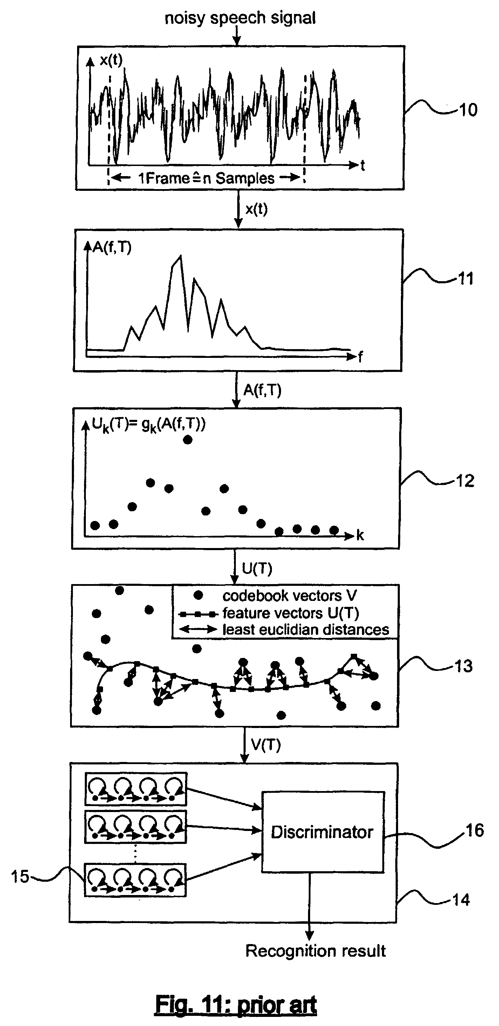

Examples of state of the art noise recognition systems are now described in connection to Figs. 11 to 13. Several function blocks of Fig. 11 to 13 may also be used in connection with a noise robust speech recognition system according to the present invention.

Figure 11 shows a block diagram of a prior art voice recognition system with noise suppressor 11 that receives samples x(t) of a noisy speech signal from a sampling unit 10 at time t. The noise suppressor outputs at time T noise-reduced speech signal A(f,T) in the spectral domain, that is processed by a feature generator 12 computing from A(f, T) a feature vector U(T) by means of a transformation $g_k$. In a subsequent feature comparator 13 feature vector U(T) is compared with a set of codebook vectors V being the internal data representation of the system. At least one codebook vector V(T) has least Euclidian distance to the feature vector U(T) and is communicated to a decision unit 14 that compares a V(T) sequence with word models 15 representing the words that can be recognized by the system. A discriminator 16 judges the results of said comparison and yields a recognition result or a rejection, i.e. outputs information that the input speech signal x(t) was identified or not identified with a word out of the set of words known by the system. These words may be stored as word models in a storage unit or the like.

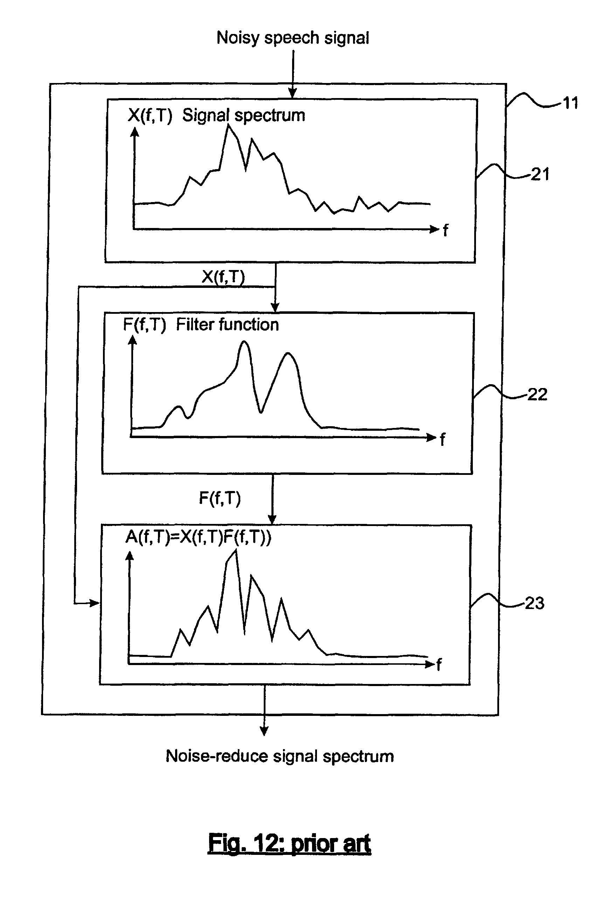

According to Figure 12, the conventional noise suppressor 11 containing a Fourier transform unit 21 that transforms at time T a frame of n samples of the input signal x(t) into a spectral signal X(f,T). In a filter-function calculator 22 a filter function F(f,T) is generated by means of X(f,T). F(f,T) is applied to the noisy speech signal in a filter unit 23 that computes A(f,T)=X(f,T)F(f,T) and supplies a noise reduced speech spectrum A(f,T) being output of the noise suppressor 11.

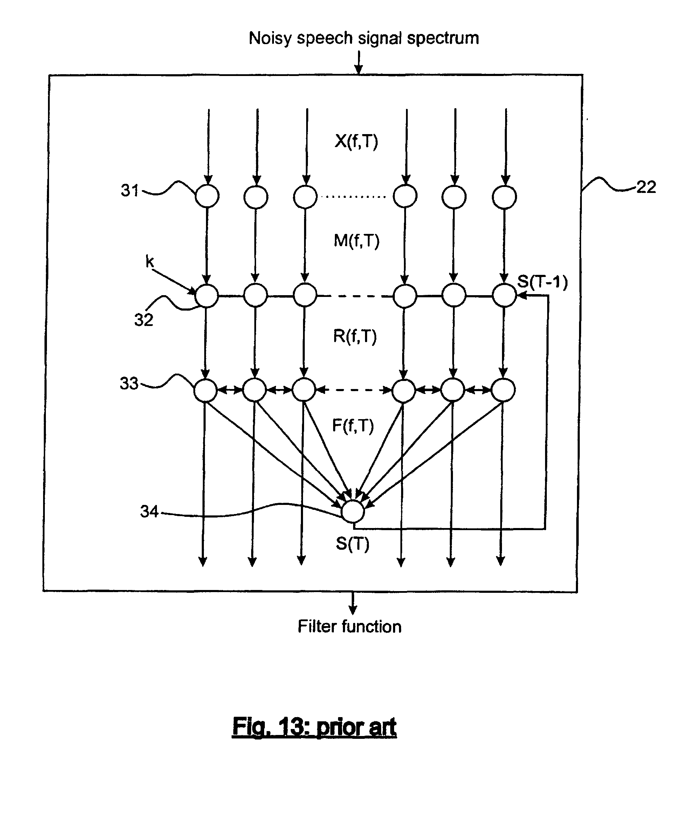

The computation of a filter function F(f,T) from X(f,T) is shown with reference to Figure 13. A state-of-the-art filter function calculator 22 comprises a minima detect layer 31 which averages X(f,T) in T over m frames and detects minima M(f,T) for each frequency f of the averaged signal within a T-interval of the length of I frames. A reaction layer 32 computes from M(f,T) and X(f,T) a relative spectrum R(f,T) by means of a reaction function r() with argument S(T-1), taking into account a control parameter K controlling the amount of noise suppression. In detail, R(f,T) may be computed by the formula:

$$R(f,T) = 1 - \frac{M(f,\,T)r(S(T-1))K}{X(f,T)}$$

A diffusion layer 33 computes the filter function F(f,T) by means of spectral diffusion with a diffusion constant D using the formula:

$$F(f,T) = R(f,T) + D\frac{\partial^2 R(f,T)}{\partial f^2}$$

An integration layer 34 computes from F(f,t) a spectral integral S(T) which is fed back to the reaction layer 32. The spectral integral may be calculated by the formula:

$$S = \int F(f,T)df$$

Based on the foregoing, embodiments of the present invention provide an improved noise robust speech recognition method and apparatus.

SUMMARY OF THE INVENTION

The present invention as claimed overcomes the foregoing and other problems with a robust speech recognition in which information generated in noise suppression, disturbance reduction or speech recognition operations are used to improve the recognition result.

Methods, apparatuses, systems and articles of manufacture consistent with the present invention use information like noise affection of the speech signal and/or deviations between noise reduced signal spectrum and values of a codebook as parameters in the recognition operation. This improves the recognition result by more relying on components in the speech spectrum which are less affected by noise and/or by averaging deviations between a feature vector generated from the noise reduced signal spectrum and codebook vectors caused by noise, other unforeseen effects or a modified frequency characteristic in the signal path, e.g. by using a different microphone.

In accordance with methods consistent with the present invention, a robust speech recognition method is provided in which a noise-reduced signal spectrum and a confidence vector are generated from a noisy speech input signal, a feature vector is generated from the noise-reduced signal spectrum, a codebook vector relating to said feature vector is determined using the confidence vector, and a recognition result is generated by determining a best matching word model relating to a sequence of codebook vectors.

The confidence vector may be used to select a codebook vector which is the best matching codebook vector relating to the generated feature vector in a way that components of said feature vector that are more affected by noise are weighted weaker in the distance calculation than those less affected.

In accordance with methods consistent with the present invention, a robust automatic speech recognition method is provided in which a noise-reduced signal spectrum is generated from a noisy speech input signal, a feature vector is generated from the noise-reduced signal spectrum, a codebook vector is determined which relates to the generated feature vector, and in a further procedure a deviation vector is generated from the deviation between the feature vector and the codebook vector, and then a modified feature vector is generated by using the deviation vector. Since the deviation vector changes slowly, the generation of the deviation vector may be carried out in not every single recognition cycle but rather in every third, fifth or tenth cycle to e.g. save processing capacity.

The methods according to the present invention described above are linked by a common concept that specific features which are influenced by noise in the noisy speech signal and/or other disturbances and/or changed transmission characteristics of devices in the signal path are calculated as vectors defining the signal and/or the system. In the method according to the present invention, these vectors may then be used to improve the determination of a best matching codebook vector.

The noise consistency of the speech recognition method and system can be improved or, in other words, the speech to noise ratio can be decreased by still getting usable recognition results. The calculated vectors may represent the degree and the manner of which the speech signal is affected by noise or disturbances in the signal path. With respect to different transmission characteristics of certain input devices, e.g. of a microphone or a A/D converter, the method and system according to the present invention adjusts itself by taking such vectors into account in the recognition process.

Highly reliable speech recognition results are obtained with a method or system according to the present invention in which both the confidence vector and the deviation vector are used to improve the quality of the feature vector and the matching result by determining the codebook vector.

The deviation vector is calculated for the compensation of disturbances and, specifically of unforeseen effects in the feature vector generation process. By calculating the deviation vector, deviations between the feature vector and the codebook vector caused by noise or other unforeseen effects are averaged so that the deviation vector can be used as a compensation factor by generating a modified feature vector. The deviations between the feature and the codebook vectors can be averaged in time by using a low pass filter filtering the deviation vectors.

In accordance with systems consistent with the present invention a robust automatic speech recognition system is provided.

The invention also provides a software tool for implementing on a computer a robust speech recognition system and a computer program product comprising computer program code which when executed on a computer enables the computer to carry out the robust speech recognition method according to the present invention.

A robust speech recognition system according to the present invention may be realized by a digital signal processing system which performs the signal processing in a program- or state-machine-controlled manner.

In accordance with methods, systems and articles of manufacture consistent with the present invention, the noise robust speech recognition is used for recognizing noisy speech signals transmitted acoustically, which speech signals come from a near end user of a device that carries out the noise robust speech recognition method or contains the noise robust speech recognition system, respectively, and the noise recognition is used for controlling that device. The speech recognition method or the speech recognition system may particularly be used for controlling functions of a device in a noisy environment and in a situation where limited processing power is available. Particularly, a speech recognition system and method may be used for controlling functions of devices of e.g. a motor vehicle, e.g. a window winder, a radio receiver, a navigation system, a mobile telephone or even to control the motor vehicle itself.

The above-mentioned and other features, utilities and advantages of the invention will become apparent from the following detailed description of preferred embodiments of the invention together with the accompanying drawings.

Other systems, methods, features and advantages of the invention will be or become apparent to one skilled in the art upon examination of the following figures and detailed description. It is intended that all such additional systems, methods, features and advantages be included within this description, be within the scope of the invention, and be protected by the accompanying drawings.

BRIEF DESCRIPTION OF THE DRAWINGS

The accompanying drawings, which are incorporated in and constitute a part of this specification, illustrate an implementation of the invention and, together with the description, serve to explain the advantages and principles of the invention. In the drawings:

Fig. 1    depicts a block diagram of a noise robust speech recognition system according to first embodiment of the present invention;

Fig. 2    depicts a block diagram of a noise robust speech recognition system according to second embodiment of the present invention;

Fig. 3    depicts a block diagram which illustrates a digital signal processing system according to an embodiment of the present invention;

Fig. 4    depicts a flow diagram which illustrates a method according to an embodiment of the present invention;

Fig. 5    depicts a flow diagram illustrating in more detail an operation of generating the confidence vector consistent with a method according to the present invention;

Fig. 6    depicts a flow diagram illustrating in more detail an operation of generating the codebook vector consistent with a method according to the present invention;

Fig. 7    depicts a flow diagram which illustrates a method according to an embodiment of the present invention;

Fig. 8    depicts a flow diagram illustrating in more detail an operation of generating the deviation vector consistent with a method according to the present invention;

Fig. 9    depicts a flow diagram illustrating in more detail an operation of generating the feature vector using the deviation vector consistent with a method according to the present invention;

Fig. 10   depicts a flow diagram which illustrates a method according to an embodiment of the present invention;

Fig. 11   depicts a block diagram of a prior art voice recognition system;

Fig. 12   depicts a block diagram of a prior art noise suppressor;

Fig. 13   depicts a scheme of a prior art filter function calculator;

Fig. 14   depicts a block diagram of a data flow system which illustrates a noise suppressor according to an embodiment of the present invention;

Fig. 15   depicts a block diagram of a data flow diagram of a noise robust speech recognition system in accordance with methods, systems and articles of manufacture consistent with the present invention;

Fig. 16a  depicts a scheme of a prior art feature generator;

Fig. 16b  depicts a scheme of a feature generator according to an embodiment of the present invention;

Fig. 17   depicts a block diagram of a feature comparator according to an embodiment of the present invention;

Fig. 18   depicts a block diagram of a deviation calculator or deviation vector calculator according to an embodiment of the present invention.

DESCRIPTIONS OF THE PREFERRED EMBODIMENTS

The following symbols will be used by describing the preferred embodiments according to the present invention:

$A(f,T)$    Signal spectrum, i.e. amplitude of frequency mode f at time T after noise suppression;

$c(T)$    Confidence vector computed by the confidence unit of the noise suppressor;

$c_k(T)$    components of $c(T)$;

$d(T)$    Deviation vector computed by the deviation calculator;

$d_k(T)$    components of $d(T)$;

D          Diffusion constant determining the amount of smoothing in the diffusion layer;

F(f,T)     Filter function generating A(f,T) from X(f,T): A(f,T) = X(f,T)F(f,T) for all f at time T;

f          frequency which distinguishes the modes of a spectrum;

g          Function set for computing a feature vector U(T) out of a spectrum A(f,T);

h          Function set for computing confidence vector c(T);

k          Index denoting the components of vectors d(T), c(T), U(T) and V as well as of the transformations g and h;

K          Parameter for setting the amount of noise suppression;

I          Number of frames from which M(f,T) may be obtained as the minimum of the averaged X(f,T);

m          Number of frames averaged to determine M(f,T);

M(f,T)     Minimum within I frames of amplitude X(f,T) averaged over m;

n          Number of samples per frame;

q          Time constant in deviation calculator;

R(f,T)     Relative spectrum generated by the reaction layer of the noise suppressor;

r[S(T)]    Reaction function of the filter function calculator of the noise suppressor;

S(T)       Integration signal corresponding to the integral of F(f,T) over f at time T;

t          Time in which the speech signal is sampled;

T          Time in which the time signal is processed to form frames and spectra are derived therefrom;

U(T)       Feature vector at time T computed from A(f,T);

$U_k(T)$   components of U(T);

V          Set of codebook vectors in feature space;

V(i)       codebook vector in V;

$V_k(i)$   components of V(i);

$V_k(T)$   components of V(T);

V(T)       codebook vector with least distance to U(T);

x(t)       Samples of the noisy speech signal;

X(f,T)     Spectrum of the noisy speech signal.

The present invention will now be described with reference to the accompanying drawings.

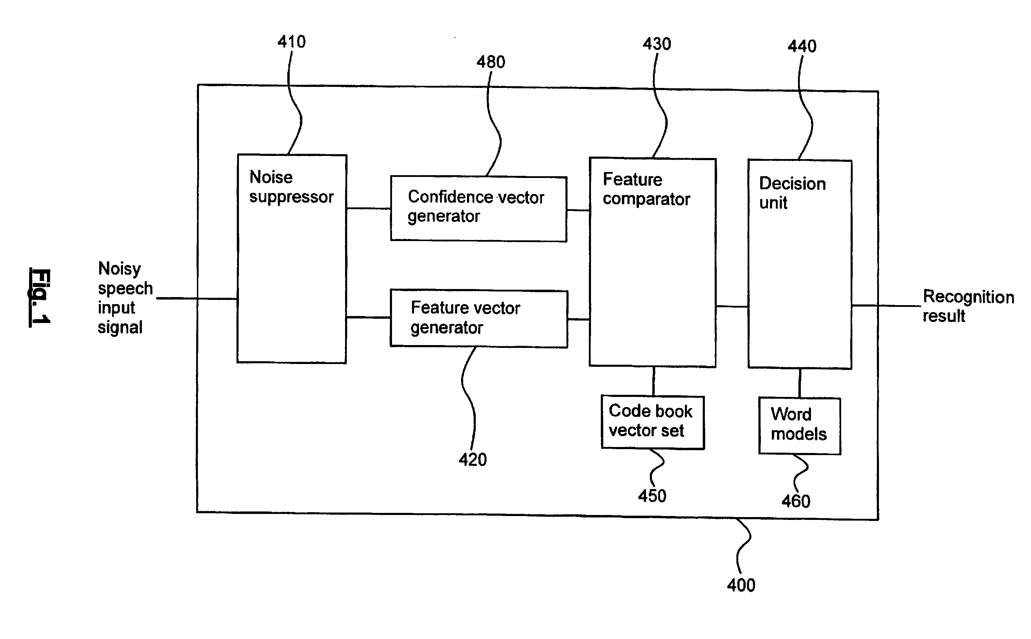

Fig. 1 depicts a block diagram of a robust speech recognition system 400 suitable for practicing methods and implementing systems consistent with an embodiement of the present invention. The robust speech recognition system 400 comprises a noise suppressor 410 for generating a noise-reduced signal spectrum from a noisy speech input signal. A confidence vector generator 480 is coupled to the noise suppressor and generates a confidence vector which indicates how strong a speech component was affected by noise before the noise suppression. The noise reduced signal spectrum is further processed in a feature vector generator 420 which is also coupled to the noise suppressor and which generates a feature vector from the noise-reduced speech signal spectrum. A feature comparator 430 which receives the confidence vector and the feature vector determines a codebook vector relating to the feature vector influenced by the confidence vector. The feature comparator 430 has access to a codebook vector set 450 in which a set of codebook vectors V in feature space is stored and from which a codebook vector relating to the feature vector is selected. For example, the selected codebook vector is the best matching codebook vector which means that the selected codebook vector is the vector in feature space with the lowest or a minimum deviation to the feature vector. In a decision unit 440 of the noise robust speech recognition system 400 a recognition result is then determined by selecting a word model relating to a sequence of determined codebook vectors. The decision unit selects the word model from a word model database 460 storing the word models to be recognizable by the system. For example, a sequence of determined codebook vectors is compared with the word models and the word model having the most features in common with the sequence is recognized as the input speech signal.

The confidence vector generator further improves the recognition result since the confidence vector modifies the metric between the feature vector and the codebook vectors in relation to the noise intensity affecting the speech signal. This noise related modification is achieved by taking vector components more affected by noise less into consideration then those components less affected when calculating distances between feature vectors and codebook vectors.

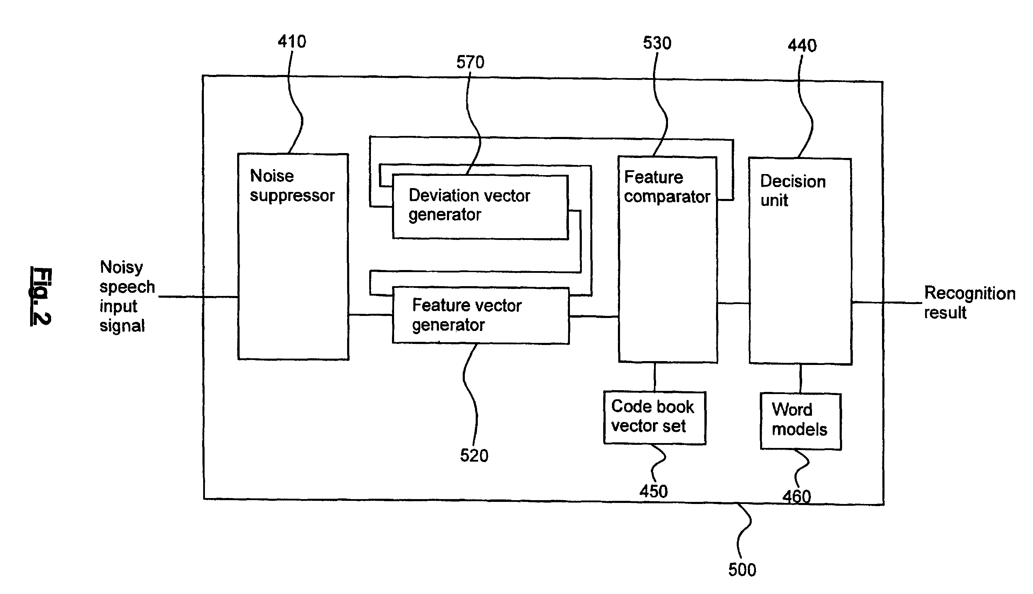

Fig. 2 depicts a block diagram of a noise robust speech recognition system 500 suitable for practicing methods and implementing systems consistent with another embodiement of the present invention. The noise robust speech recognition system 500 comprises also a noise suppressor 410 for generating a noise-reduced signal spectrum from a noisy input speech input signal. The noise reduced signal spectrum is further processed in a feature vector generator 520 which is coupled to the noise suppressor and which generates a feature vector from the noise-reduced speech signal spectrum. The feature vector comparator 530 receives as a further input a deviation vector which is used in the process of generating the feature vector. A feature vector comparator 530 which is similar to the one described in connection with Fig. 1 receiving the feature vector from the feature vector generator determines out of a set of codebook vectors a codebook vector relating to the feature vector. In a deviation vector generator 570 a deviation vector is generated from deviations between feature vectors and relating codebook vectors. This deviation vector is then used in a next recognition cycle in the feature vector generator to generate a further feature vector. Also the feature comparator 530 has access to the codebook vector set 450 in which a set of codebook vectors V in feature space is stored and from which a codebook vector relating to the feature vector is selected. In the decision unit 440 of the noise robust speech recognition system 500 a recognition result is then determined as described with respect to Fig. 1.

As well as the confidence vector, the deviation vector is used in the recognition process to improve the recognition result. The deviation vector is generated from deviations of feature vectors and codebook vectors. Since the codebook vectors are fixed in their spectral parameters or components in feature space, the feature comparision becomes difficult if the components of the feature vector are affected by unforeseen effects or drift. Such unforeseen effects could be disturbances such as a change in the signal path, e.g. by a different microphone or a different A/D-converter. The deviation vector generator then determines the deviation between the feature vectors and the codebook vectors and generates a deviation vector for compensation of this deviation.

According to an embodiement of the invention, the deviation vector also averages deviations between the feature vectors and the codebook vectors over the time by using a kind of a low pass filter funtionality.

One skilled in the art will appreciate that systems and methods consistent with the present invention may by implemented in various data processing systems, like digital signal processing (DSP) systems, microcontroller, or any other computer system.

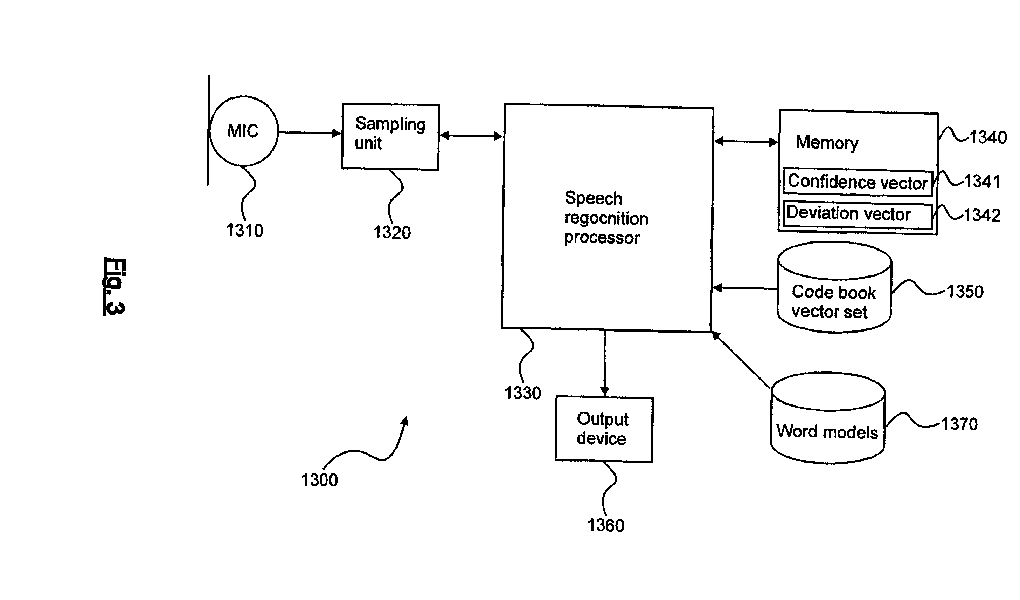

For example, the present invention may be implmented in a digital signal processor (DSP) system 1300 as illustrated schematically in Fig. 3. The DSP system implementing the noise robust speech recognition system according to the invention may comprise a processing unit and one or more storage units. A noisy speech signal is recorded by a microphone 1310 and preprocessed by a sampling unit 1320. The sampling unit 1320 may comprise a sample and hold circuit and an A/D-converter which produces samples x(t) of the noisy speech signal which then are input to the processing unit like a speech recognition processor 1330. The DSP system may further comprise an output device 1360. The functionality of the system as described with respect to Fig. 1 and 2 is realized by a computer program stored in memory 1340 which when executed on the speech recognition processor implements methods and systems consistent with the present invention.

The memory 1340 may be a volatile memory and may be used as main memory of the system 1300. As storage units, the system may further comprise a non-volatile memory 1350 storing the codebook vector set V and a non-volatile memory 1370 storing the word models related to words to be recognized.

In accordance with an embodiment of the invention, the memory 1340 includes the confidence vector as a data structure 1341. This means that the current confidence vector after generating in the speech recognition processor 1330 is stored in the memory 1340 and fetched by the processor 1330 before the distance between the feature vector and the confidence vector is calculated. In another embodiment of the invention, a set of confidence vectors generated by the system is stored in memory and used in further speech recognition operations.

In accordance with another embodiment of the invention, the memory 1340 includes the deviation vector as a data structure 1342. This means that the current deviation vector after generation or updating in the speech recognition processor 1330 is stored in the memory 1340 and fetched by the processor 1330 before a feature vector is generated. In another embodiment of the invention, also the last current deviation vector or a set of deviation vectors generated by the system is stored in memory and used to generate the new deviation vector in the update operation. For example, the present or last current deviation vector enters into the generation of the new the deviation vector to implement a kind of a low pass filter functionality or may be used in further speech recognition operations.

The noise robust speech recognition system 1330 according to the present invention is particularly applicable to DSP systems comprising a standard DSP processor like a Texas Instruments TMS 320C5402 or any other fixed-point DSP with a performance range of at least 60 MIPS. Such a performance is sufficient due to the good recognition results of the system also by a relatively low sampling rate in the range of 8 to 16 kHz and a processing width of 16 bit. Good recognition results can be achieved by a sampling rate in the range of 12 kHz to 16 kHz. For example, low cost processors are applicable to the system which may be implemented in an embedded control application like a board computer in a motor vehicle or the like without the need for further processing power. The result of the speech recognition used to control functions of e.g. the vehicle or any other systems by outputting the recognition result in an appropriate format at an output device 1360. The output device may for example be an interface circuit to a radio receiver or a mobile telephone. According to an embodiment of the invention, the speech recognition processor generates in response to instructions stored in the main memory 1340 noise-reduced signal spectra and a confidence vector from a noisy speech input signal recorded by the microphone 1310 and sampled by the sampling unit 1320. Then, the speech recognition processor 1330 further generates in response to instructions stored in the memory a sequence of feature vectors from said noise-reduced signal spectra, determines in relation to said sequence of feature vectors a sequence of codebook vectors from a set of codebook vectors stored in a flash memory 1350 by using said confidence vectors and then a recognition result by calculating from a set of word models stored in the flash memory 1350 a best matching word model relating to said sequence of codebook vectors.

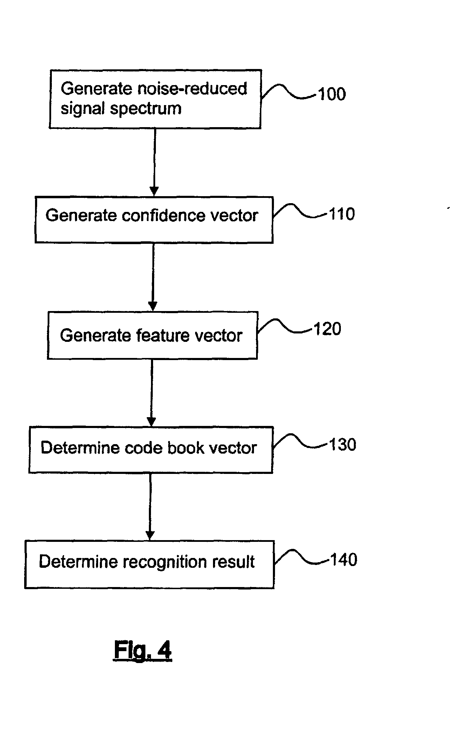

An embodiment of the noise robust speech recognition method according to the present invention is shown in Fig. 4 and will now be described. After or together with the generation of a noise-reduced signal spectrum from a noisy speech signal (operation 100) a confidence vector is generated (operation 110) from the spectrum of the noise in the noisy speech signal. In operation 120, a feature vector is generated from the noise reduced signal spectrum. After feature vector generation, a codebook vector relating to the feature vector is determined in operation 130.

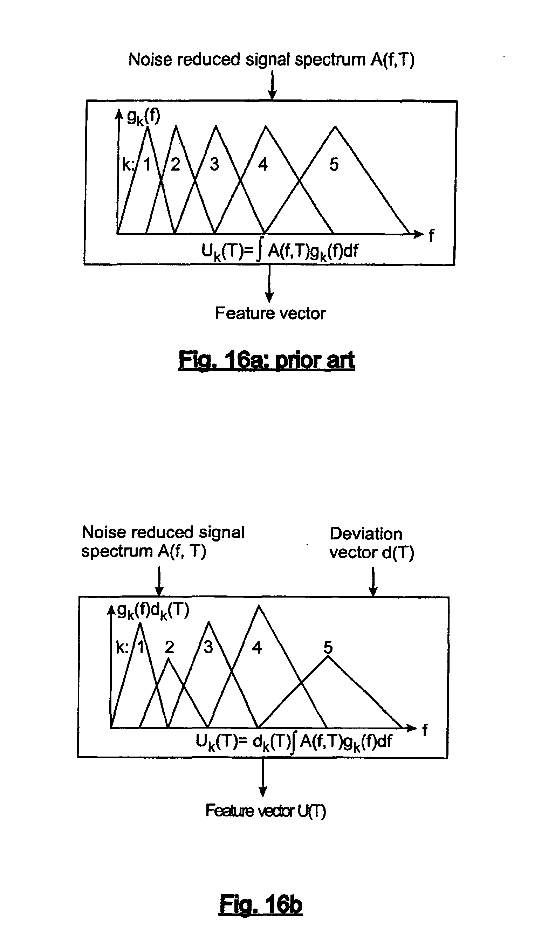

The feature vector represents an energy distribution in different frequency bands of the noise-reduced signal spectrum after transformation with a function set g. The function set g comprises transformation functions $g_k$ for different spectral bands as depicted in Figs. 16a and 16b. With the function set g the signal sectrum is transformed in a manner that the components of the feature vector are suited to qualify the human speech. A set of codebook vectors V in feature space is used as internal data representation representing parts of word models to be recognized. The codebook vectors have components similar to the components of the feature vector. A sequence of codebook vectors relates to a word model.

In the determination operation 130 it is now determined which codebook vector is the best matching codebook vector relating to the feature vector by using the confidence vector. The best matching codebook vector may be found by determine a codebook vector which is most similar to the feature vector.

According to an embodiment of the invention, the best matching codebook vector is that codebook vector which has a minimum distance from the feature vector. The determination of the distance between the codebook vector and the feature vector is influenced by the confidence vector such that the confidence vector modifies the metric used for the distance determination in feature space. A codebook vector V(T) is selected as that codebook vector out of the set V having least distance to the feature vector U(T) by comparing the feature vector with the set of codebook vectors V under a metric modified by the confidence vector c(T). The confidence vector modifies the metric for the distance calculation in a way that components of the feature vector $U_k(T)$ which are more affected by noise are rated weaker than components less affected by noise. Codebook vectors V(T) with such least non-Euclidian distances to feature vectors U(T) are then further processed to determine a recognition result in operation 140.

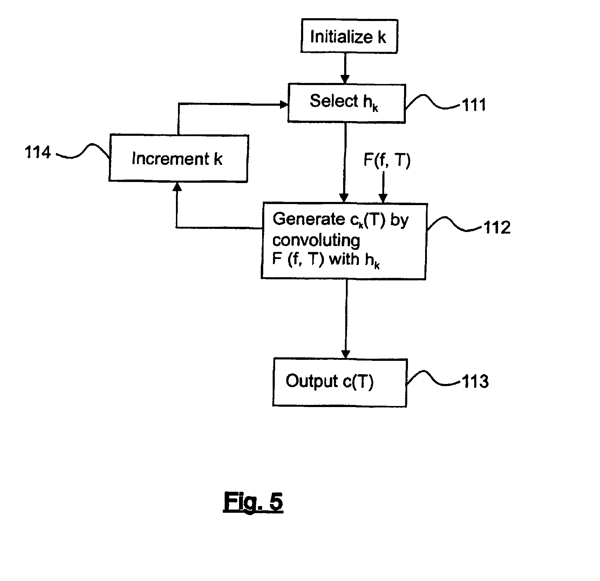

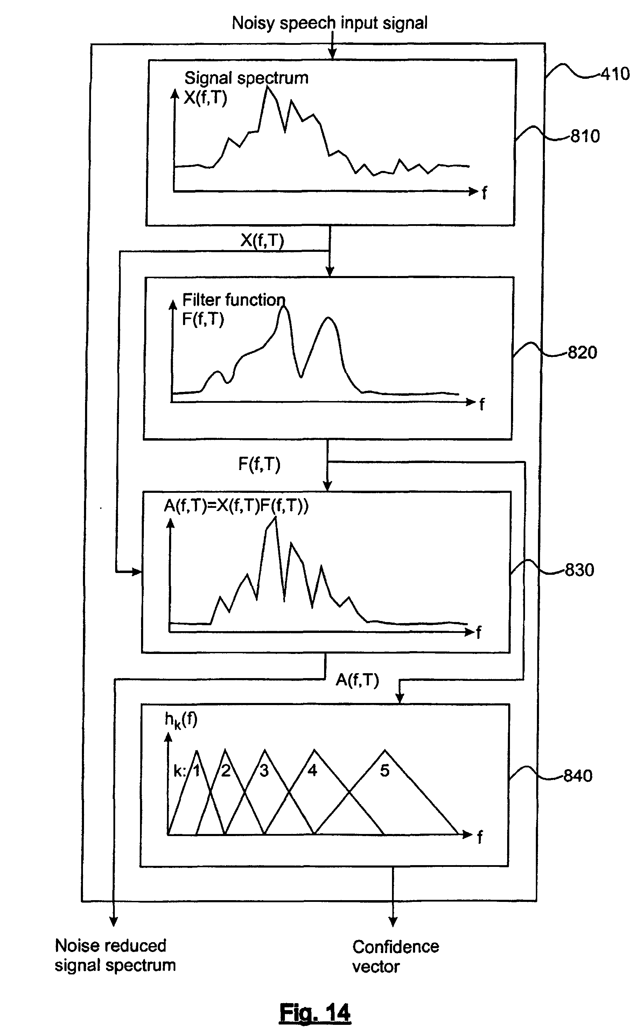

The generation of the confidence vector c(T) is shown with reference to Fig. 5. In operation 111, a function $h_k$ out of the function set h is selected. By means of example, the function set $h_k$ is depicted in Fig. 14. Filter function F(f,T) is then convoluted with selected function $h_k$ in operation 112 to generate a confidence vector component $c_k(T)$. With the filter function F(f,T), the noise-reduced signal spectrum was generated from the spectrum of the noisy speech signal. Therefore, the filter function may be used to determine the amount of speech degradation within the respective band and to calculate components of the confidence vector. The operations 111 and 112 are repeatedly carried out by a loop operation until a complete set of confidence vector components $c_k(T)$ is calculated and the resulting confidence vector c(T) is output in operation 113. At the beginning of the loop operation, k is initialized and then used as loop index by incrementing k in every loop cycle (operation 114). One skilled in the art will appreciate to use beside incrementing k any other method may be used to select a next possible components to generate a complete confidence vector c(T).

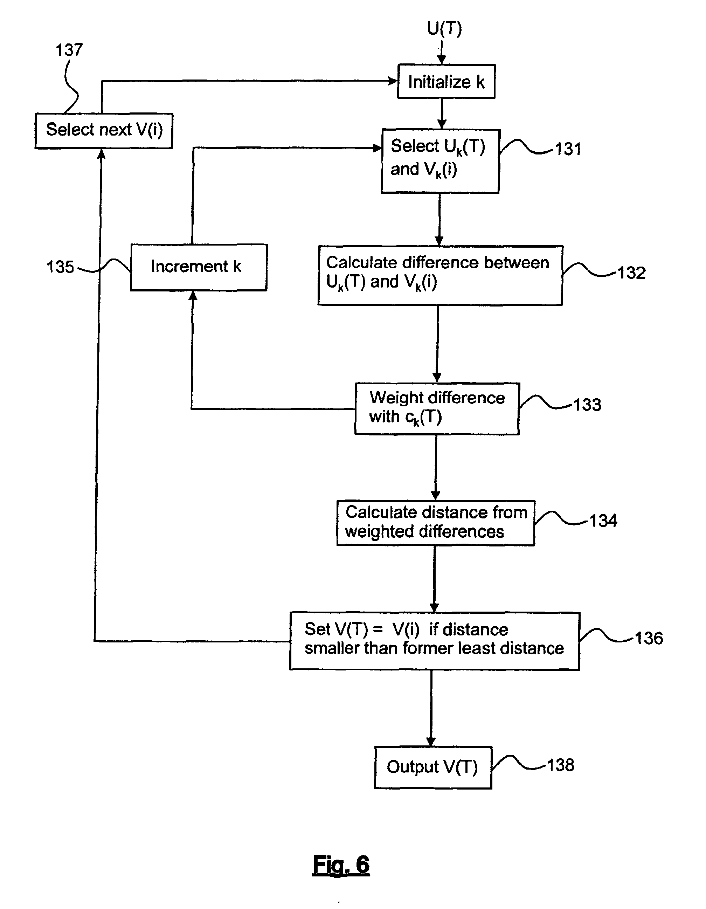

To determine the best matching codebook vector V(T), at least one codebook vector V(i) with a least distance to the feature vector U(T) is selected from the set of codebook vectors V as shown in Fig. 6. Starting with any codebook vector V(i) out of the set of codebook vectors V, a component $U_k(T)$ of the feature vector U(T) and a respective component $V_k(i)$ of the codebook vector V(i) are selected in operation 131. Then, a difference between the components of the feature vector $U_k(T)$ and the respective components of the codebook vector $V_k(i)$ is calculated in operation 132. The difference is weighted with the respective component of the confidence vector $C_k(T)$ in operation 133. Weighted differences for all components are calculated in a loop operation with k as the loop index. At the beginning, as shown in Fig. 6, k is initialized and then incremented in every loop cycle (operation 135). After weighted differences are calculated for all components of V(i) and U(T), the loop is left and the distance between the feature vector U(T) and the codebook vector V(i) is calculated from the weighted differences in operation 134. This means that the distance of codebook vector V(i) to U(T) is determined using a non-Euclidian metric modified by C (T).In operation 136, the distance of the present codebook vector with least distance to the feature vector V(T) is compared with the distance of the codebook vector V(i). If the distance of V(i) is smaller than the distance of the former best matching codebook vector V(T) or there is no V(T), V(i) becomes the new best matching codebook vector V(T). Then, a next codebook vector V (i) is selected in operation 137 and the operations 131 to 136 are repeatedly carried out until the best matching codebook vector V(T) out of the set of codebook vectors V is determined. In a subsequent operation 138 the best matching codebook vector V(T) is then output and may then be used to determine a recognition result.

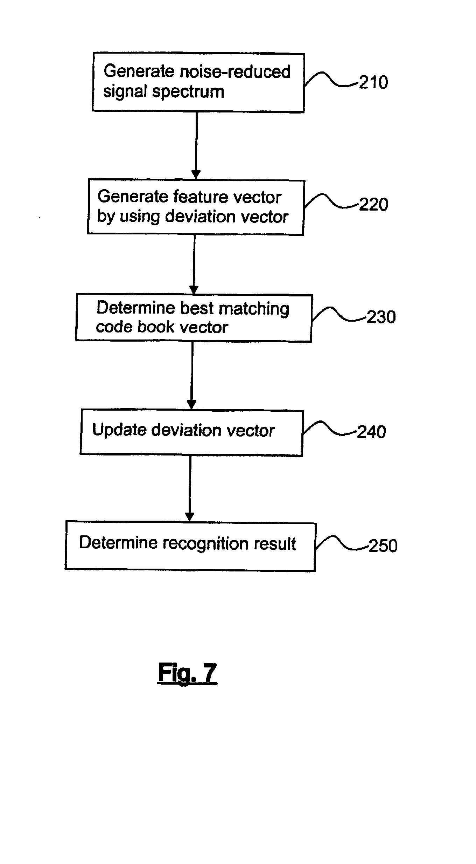

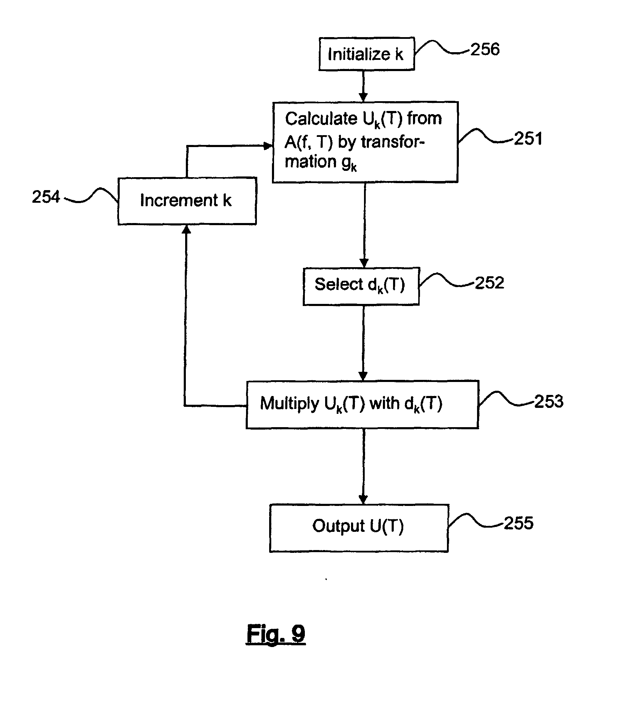

According to another embodiment of the present invention, a noise robust speech recognition method comprises the generation of a deviation vector which will be now described in connection with Figs. 7 to 9 and 10.

In operations 210 a noise-reduced signal spectrum is generated from a noisy speech signal. From this noise-reduced signal spectrum a feature vector is generated by using the deviation vector (operation 220). Then, a codebook vector is determined in operation 230 using a metric which may be modified as described above. Deviations between the feature vector U(T) and the codebook vector V(T) are used to update the deviation vector in operation 240. In subsequent operation 250, a recognition result is yielded depending on the determined codebook vectors. A sequence of these codebook vectors is compared with word models stored in the system and the recognition result is then either a word out of the set of words recognizable by the method or an output that no word could be recognized.

The current deviation vector d(T) is used to calculate the feature vector U(T) (in operation 241). By means of a time constant q the deviations between the feature vectors and the codebook vectors caused by disturbances or other unforeseen effects are averaged over the time. In other words, a new deviation vector d(T+1) may be calculated from the present deviation vector d(T) and the deviations between the feature vector and the codebook vector. Depending on the time constant q, the newly calculated deviation vector d(T+1) is mainly determined by either the present deviation vector (q near 0) or mainly by the deviation between the present feature vector U(T) and the best matching codebook vector V(T) (q near 1). In a configuration according to an embodiment of the invention, it may be preferred that the time constant q has a value between 0 and 0.5 which results that the new deviation vector d(T+1) is a good compromise between the low pass function for compensating a disturbance or unforeseen effects like dynamic noise and the sensitivity of the deviation vector for deviations between the feature vector and the codebook vector.

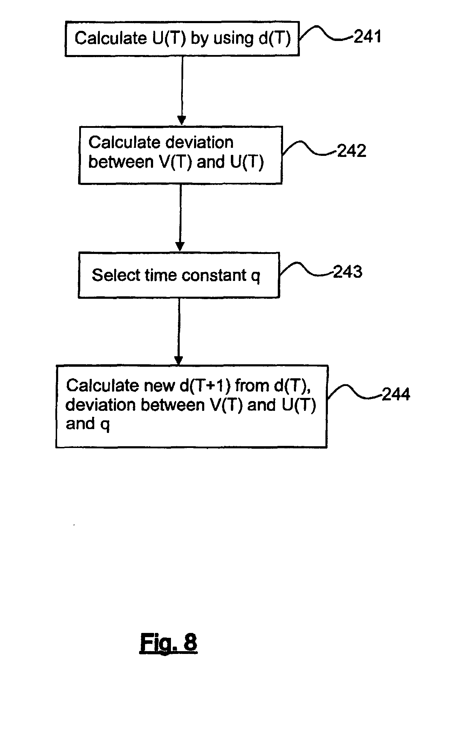

With reference to the flow diagram depicted in Fig. 8, a more detailed operation of deviation vector calculation is now described. After calculation of the featue vector U(T) by using d(T) in operation 241, the deviation between the feature vector and the determined codebook vector V(T) is calculated (operation 242). In operation 243 time constant q is selected and in a subsequent operation new deviation vector d(T+1) is calculated from current deviation vector d (T), deviation between V(T) and U(T) and the time constant q.

According to an embodiment of the present invention, the deviation vector may be calculated by the following formula:

$$d(T+1) = d(T) + (d(T)V(T)/U(T) - d(T))q$$

Fig. 8 is a flow diagram illustrating in more detail how the feature vector is calculated (operation 220 in Fig. 6 and operation 241 in Fig. 7, respectively). Component index k ist initialized in operation 256. In a following loop operation in which k serves as a loop index components of the feature vector are calculated from the noise-reduced signal spectrum A(f,T) by transformation $g_k$ in operation 251. In each loop one component $U_k(T)$ of the modified feature vector is calculated. In operation 252, the respective component of the deviation vector is selected with which in operation 253 the calculated feature vector component is multiplied. After incrementing the loop index k in operation 254, operations 251 to 253 are repeated until a complete modified feature vector is generated and output in operation 255.

According to another embodiment of the present invention, the deviation vector is updated each time a new codebook vector is determined so that always a current deviation vector is present.

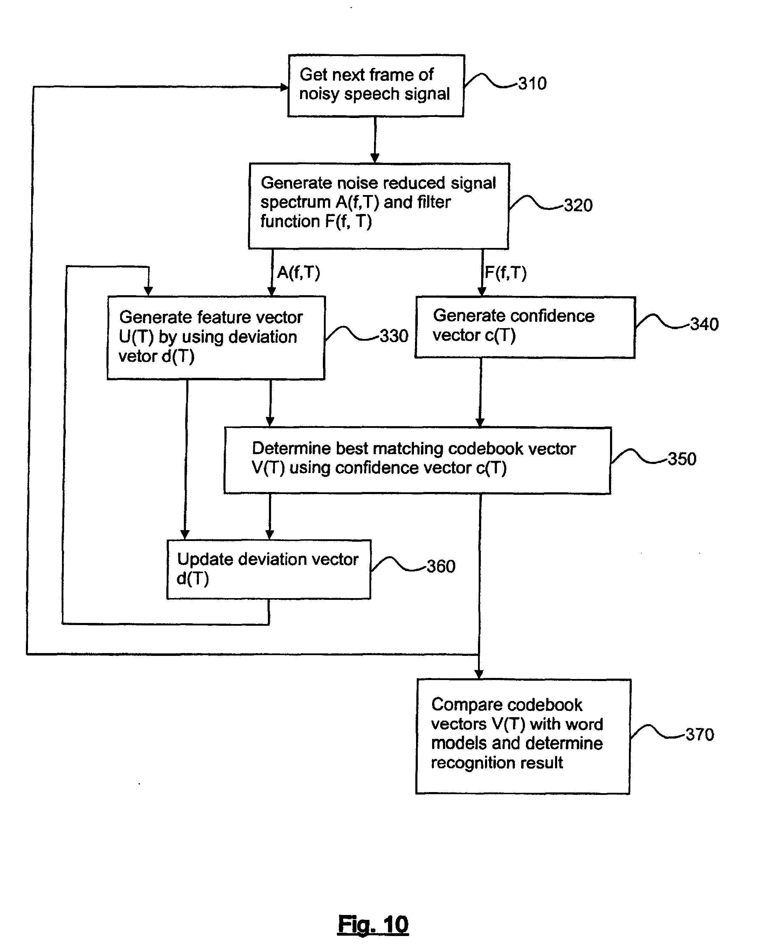

Fig. 10 depicts a block diagram of a data flow starting with frames of a noisy speech input signal to a recogntition result which practices methods and implements systems consistent with the present invention. A next frame of the stream of noisy speech input signal including samples of the noisy speech signal is got in operation 310 and may be prepared for further processing, by e.g. quantization. From the noise reduced signal a signal spectrum is generated and in a subsequent step a noise reduced signal spectrum A(f,T) is generated by filter function F(f,T) in operation 320. For noise reduction a method similar to the one described with respect to Fig. 12 may be used. The filter function may be generated by a method similar to the one described with respect to Fig. 13. The noise reduced signal spectrum A (f,T) is then used in operation 330 to generate the feature vector U(T) by using the deviation vector d(T). In operation 340, the confidence vector is generated from the filter function F(f,T) and function set $h_k$. Both, the feature vector and the confidence vector are used to determine the codebook vector relating to the feature vector in operation 350. This determined codebook vector represents the best matching codebook vector in the set of codebook vectors available by the system under the used metric. Both, current best matching codebook vector and current feature vector are then used to update the deviation vector, which means that a new deviation vector is calculated in operation 360. This new deviation vector is used in a next recognition cycle to generate a new feature vector (operation 330 or operation 241: calculating U(T) by using d(T)).

After a sequence of codebook vectors is determined, in operation 140, 260 or 350, word models corresponding to these codebook vector sequence are selected and output as recognition result in operation 370.

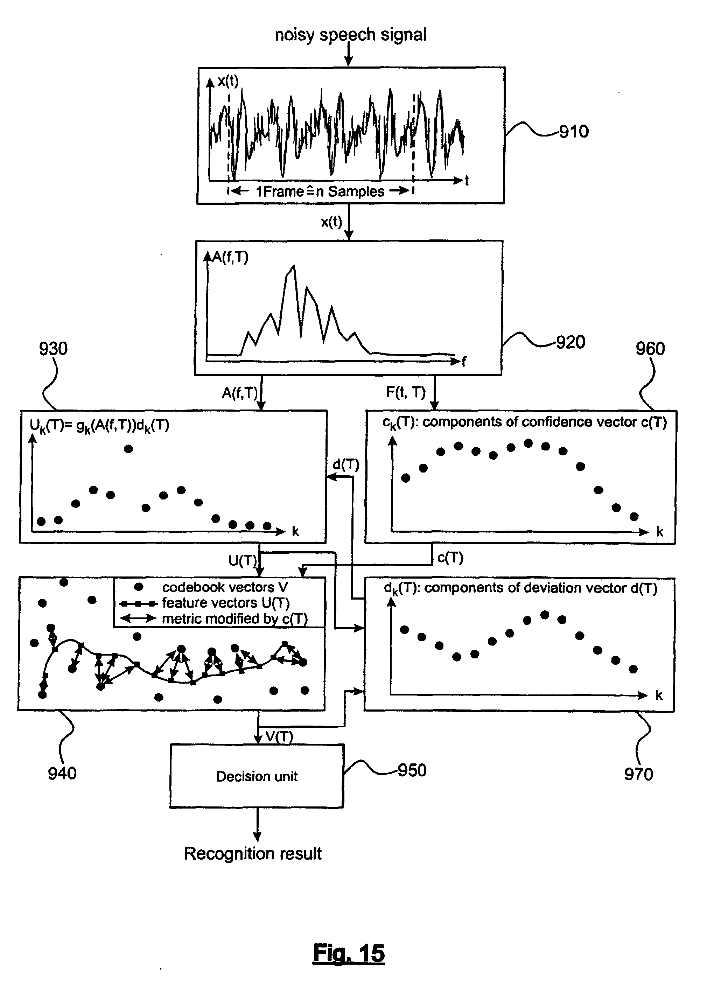

A block diagram of a voice recognition system of an embodiment according to the present invention is shown in Fig. 15. The noise robust speech recognition system comprises a sampling unit 910 which samples, digitizes and divides a speech signal x(t). The speech signal is then used to compute a noise reduced signal spectrum A(f,T) in the noise suppressor 920. The filter function F(f,T) which generates the signal spectrum is also output from the noise suppressor 920 and used by the confidence calculator 960 to calculate the components of the confidence vector c(T). In the feature generator 930 the feature vector U(T) is calculated from signal spectrum A(f,T) and deviation vector d (T) which is calculated in deviation calculator 970. The feature comparator then compares components of the feature vector with components of vectors of a set of codebook vectors and chooses a codebook vector which is nearest to the feature vector under a metric modified by the confidence vector. A decision unit 950 processes a sequence of codebook vectors in order to calculate a recognition result by comparing the sequences of codebook vectors with word models which are preferably stored in a storage unit. A discriminator of the decision unit 950 finds then the best matching word model relating to the codebook vector sequence and outputs it as the recognition result. During the processing, a deviation calculator calculates a deviation between the feature vector and the confidence vector and averages the deviations preferably by means of a low-pass filter so that noise or other unforeseen effects which cause a deviation between the feature vector and the codebook vector can be compensated.

Fig. 14 depicts a block diagram showing the noise suppressor 410 which is now described. The noisy speech input signal is input to a Fourier transform unit 810 which outputs a spectrum of the noisy speech signal which is then filtered in the filter unit 830 by the filter function F(f,T) generated in the filter function calculator 820. The filter function is then also used to calculate the confidence vector in a confidence calculation unit 840. The components of the confidence vector are calculated by a discrete integration of the filter function and the function set $h_k$ over the frequencies which correspond to the modes of the spectrum.

As illustrated in Fig. 14, confidence vector c(T) may be calculated in confidence calulator 840 by using a function set with components $h_k$. Each component of confidence vector $c_k(T)$ may be calculated by the fomula:

$$c_k(T) = \int F(f,T) h_k(f) df.$$

The components $c_k(T)$ are then assembled to confidence vector c(T) and the noise suppressor 410 outputs the confidence vector and the noise-reduced signal spectrum.

The influence of the confidence vector to the feature vector is described in connection with Figs. 16a and 16b. In Fig. 16a, a state of the art feature generator is shown in which a noise-reduced signal spectrum is input and transformed by function $g_k$ to generate the feature vector U(T). The transformation $g_k$ in Fig. 16a has the same amplitude for all modes, so that the amplitude characteristic of the feature vector corresponds one to one to the one of the noise-reduced signal spectrum A(f,T).

In contrast to that, Fig. 16b depicts how a feature vector is generated according to an embodiment of the present invention. In Fig. 16b, a feature generator is shown which has the deviation vector as an additional input. The feature generator convolutes the transformed values of the noise-reduced signal spectrum with components of the deviation vector in order to calculate the components $U_k(T)$ of the modified feature vector. As can be seen from Fig. 16b the amplitudes of the modes of the transformation $g_k$ are influenced such by the deviation vector that the averaged deviation between the modified feature vector and the codebook vector components are reduced. This means that the noise robust speech recognition system according to the present invention uses not only a static transformation $g_k$

calculating a feature vector having the same amplitude characteristic as the noise-reduced signal spectrum but also implements to modify the feature vector by the deviation vector.

As an example, if the set of codebook vectors in feature space stored in the system was recorded with a specific microphone with a certain frequency response curve or characteristic and now in the field another microphone with a different frequency characteristic is used, a corresponding deviation resulting from the different characteristics of the microphones between the feature vectors and the codebook vectors would occur resulting in an overall deterioration of the recognition result.

According to the present invention, the deviation between the feature vectors and the codebook vectors is reduced by determining the averaged deviation as deviation vector and correcting this deviation by modifying the transformation $g_k$ so that the modified feature vector gets nearer to the stored codebook vector in the further processing. The modified feature vector calculation by means of the deviation vector can be expressed by the following formula:

$$U_k(T) = g_k(A(f,T))d_k(T).$$

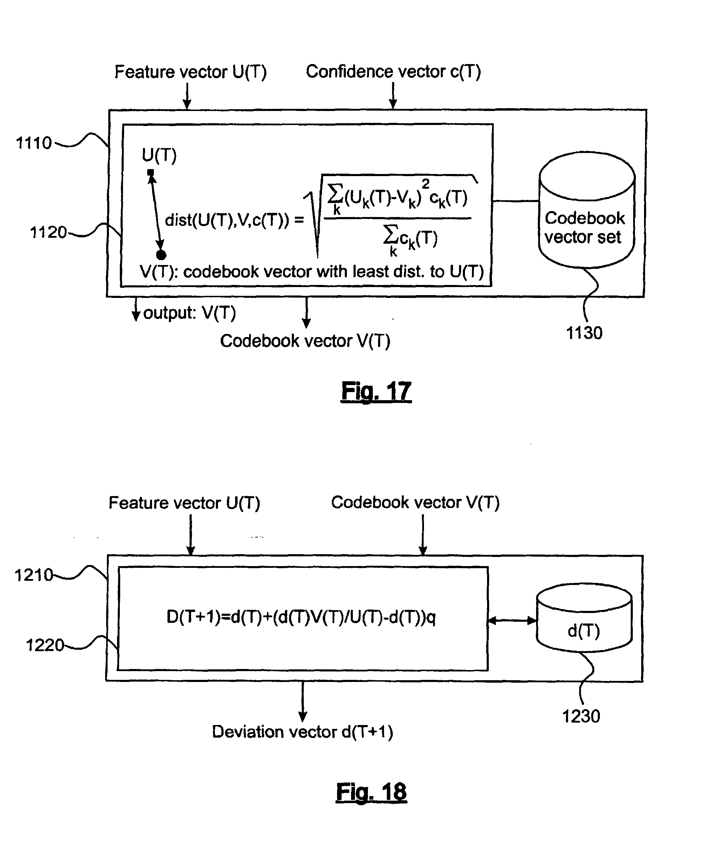

In Fig. 17 an embodiment of the feature comparator according to the present invention is shown. The confidence vector modifies a metric used for distance computation in feature space in a way that vector components of the feature vector which are more affected by noise are rated weaker than those components that are less affected. The feature comparator 1110 comprises a calculating unit 1120 and a storage unit 1130 storing the codebook vector set V. Feature vector U(T) and confidence vector c(T) are input to the feature comparator and in the feature comparator calculating unit the codebook vector V(T) with least non-Euclidian distance modified by the confidence vector to feature vector U(T) is the output of the feature comparator. In the feature comparator calculating unit the distance between the feature vector U(T) and a codebook vector V(i) of the codebook vector set V influenced by the confidence vector c(T) may be calculated by the formula:

$$\text{dist}(U(T),V(i),c(T)) = \sqrt{\frac{\sum_k (U_k(T) - V(i))^2 c_k(T)}{\sum_k C_k(T)}} \ .$$

In Fig. 18, a deviation calculator 1210 according to an embodiment of the present invention is shown. The derivation calculator comprises a deviation calculator calculating unit 1220 and storage unit 1230 storing the present deviation vector d(T).

The present feature vector and the present codebook vector are input to the deviation calculator and the new deviation vector d(T+1) is calculated in the deviation calculator calculating unit by the formula:

$$d(T+1) = d(T) + (d(T)V(T)/U(T) - d(T))q.$$

The new deviation vector d(T+1) is the output from the deviation calculator 1210 and also stored in the storage unit 1230.

Both, the feature comparator calculating unit 1120 and the deviation calculating unit 1220 access each the storage unit 1130 or 1230, respectively, in order to fetch a codebook vector or a deviation vector from the respective storage units. However, according to still a further embodiment of the invention, storage units 1130 and 1230 may be implemented in a common memory.

The set of codebook vectors in feature space is generated by algorithms which are well known in the art, e. g. the so called k-means algorithm. The set of codebook vectors may be stored in a separate database or also in the common memory.

According to an embodiment of the present invention, the noise robust speech recognition method or system is realized as software tool for implementing on a computer a noise robust speech recognition system or method as described above.

According to another embodiment of the present invention, a computer program product is provided, which comprises computer program code which when executed on a computer enables the computer to carry out a noise robust speech recognition method as described above. The computer program product may be a computer-readable medium like a CD, a computer disk, DVD, flash memory, EPROM or the like or may also be a downloadable software code portion on a server computer which is downloadable, e.g. via the Internet or the like.

It is also within the scope of the invention to implement the noise robust speech recognition system according to an embodiment of the invention in an application specific integrated circuit (ASIC) or an system-on-a-chip in which all functional units of the system are integrated. The control logic to carrying out a method according to the invention may then be implemented in a state machine on the integrated circuit. The described implementation includes software or hardware but methods, systems, and articles of manufacture consistent with the present invention may be implemented as a combination of software and hardware or in software or hardware alone. The invention may be implemented with assembler, object-oriented and non-object-oriented programming systems.

While the invention has been particularly shown with reference to preferred embodiments thereof, it will be understood by those skilled in the art that various other changes in the form and details may be made therein without departing from the scope of the invention as defined by the appended claims.

**Claims**

1. Robust speech recognition method comprising:

   - generating (100) a noise-reduced signal spectrum by filtering a noisy speech input signal using a filter function;
   - generating (110) a confidence vector from said filter function which indicates how strong a speech component was affected by noise before the noise suppression;
   - generating (120) a feature vector from said noise-reduced signal spectrum;
   - determining (130) a codebook vector relating to said feature vector by using said confidence vector;
   - determining (140) a recognition result by determining a best matching word model relating to determined codebook vectors.

2. The method of claim 1, wherein said determined codebook vector is the best matching codebook vector having a minimum distance to said feature vector.

3. The method of claim 2, wherein said best matching codebook vector is determined by selecting a codebook vector $V(T)$ with least distance to said feature vector $U(T)$ by comparing said feature vector with a set of codebook vectors $V$ under a metric modified by said confidence vector $c(T)$.

4. The method of claim 3, wherein said confidence vector modifying the metric used for distance calculation in a way that components of said feature vector more affected by noise are weighted weaker then components less affected.

5. The method of one of the preceding claims, wherein said confidence vector $c(T)$ is determined by transforming said filter function $F(f,T)$ generating said noise-reduced signal spectrum, and said generation of said confidence vector comprises repeatedly carrying out:

   - selecting (111) a function $h_k$ out of function set $h$;
   - generating (112) a component $c_k(T)$ of said confidence vector by convoluting said filter function $F(f,T)$ with said function $h_k$;
   - incrementing (114) k;

   and wherein said method further comprises:

   - outputting (113) said confidence vector $c(T)$.

6. The method of one of the preceding claims, wherein said determination of a codebook vector $V(T)$ further comprises repeatedly carrying out:

   - selecting (131) a component $U_k(T)$ of said feature vector $U(T)$ and a component $V_k(i)$ of a codebook vector $V(i)$;
   - calculating (132) difference between components $U_k(T)$ and $V_k(i)$;
   - weighting (133) said difference with $c_k(T)$;
   - incrementing (135) k;

   and wherein said method further comprises:

- calculating (134) a distance of codebook vector V(i) from said weighted differences;
- setting (136) codebook vector V(i) as codebook vector V(T) if distance of V(i) is smaller than distance of V(T);
- selecting (137) next V(i);

and wherein said method further comprises:

- outputting (138) said codebook vector V(T) as best matching codebook vector.

7. The method of one of the preceding claims, wherein the distance calculation is defined by a formula:

$$\text{dist}(U(T),V(i),c(T)) = \sqrt{\frac{\sum_k (U_k(T) - V(i))^2 c_k(T)}{\sum_k c_k(T)}}.$$

8. The method of one of the preceding claims, further comprising:

- generating (330) said feature vector by using a deviation vector;
- updating (360) said deviation vector.

9. Robust speech recognition method comprising:

- generating (210) noise-reduced signal spectra from a noisy speech input signal;
- generating (220) feature vectors from said noise-reduced signal spectra by using a deviation vector;
- determining (230) codebook vectors relating to said feature vectors;
- updating (240) said deviation vector by averaging deviations between said feature vectors U(T) and said relating codebook vectors V(T);
- determining (250) a recognition result by determining a best matching word model relating to determined codebook vectors.

10. The method of claim 9, wherein said generation (220) of said feature vector further comprises repeatedly carrying out:

- calculating (251) component $U_k(T)$ of said feature vector by transforming said noise-reduced signal spectrum A(f,T) with transformation $g_k$;
- selecting (252) component $d_k(T)$ of said deviation vector;
- multiplying (253) said feature vector component $U_k(T)$ with said deviation vector component $d_k(T)$;
- incrementing (254) k;

and wherein said method further comprises:

- outputting (255) said feature vector U(T).

11. The method of claim 10, wherein the deviation vector is updated each time a new codebook vector is determined.

12. The method of one of claims 9 to 11, wherein said deviation vector is determined by:

- calculating (241) U(T) by using current d(T);
- calculating (242) deviation between V(T) and U(T);
- selecting (243) time constant q;
- selecting current deviation vector d(T);
- calculating (244) new deviation vector d(T+1) from d(T), deviation between V(T) and U(T) and time constant q.

13. The method of claim 12, wherein said deviation vector d(T) is calculated by a formula:

$$d(T+1)=d(T) + (d(T)V(T)/U(T) - d(T))q;$$

wherein said q is a value between zero and one.

14. The method of one of the preceding claims, wherein said recognition result is determined by comparing a sequence of said determined codebook vectors with word models representing words to be recognized.

15. Robust speech recognition system (400) comprising:

    - a noise suppressor (410) for generating a noise-reduced signal spectrum by filtering a noisy input signal using a filter function;
    - a confidence vector generator (480) for generating a confidence vector from said filter function which indicates how strong a speech component was affected by noise before the noise suppression;
    - a feature vector generator (420) for generating a feature vector from said noise-reduced signal spectrum;
    - a feature comparator (430) determining a codebook vector relating to said feature vector by using said confidence vector;
    - a decision unit (440) determining a recognition result by determining a best matching word model relating to a sequence of said determined codebook vectors.

16. Robust speech recognition system (500) comprising:

    - a noise suppressor (410) for generating noise-reduced signal spectra from a noisy input signal;
    - a feature vector generator (520) for generating feature vectors from said noise-reduced signal spectra using a deviation vector;
    - a feature comparator (530) determining codebook vectors relating to said feature vectors;
    - a deviation vector generator (570) for generating said deviation vector by averaging deviations between said feature vectors and said relating codebook vectors;
    - a decision unit (440) determining a recognition result by determining a best matching word model relating to a sequence of said determined codebook vectors.

17. The system of one of the claims 15 or 16, wherein said feature comparator (430, 530, 940) outputs at least one codebook vector with least distance to said modified feature vector by comparing said feature vector with codebook vectors under a metric modified by said confidence vector.

18. The system of one of the claims 16 to 17, wherein said decision unit (440, 950) determines the recognition result by comparing a sequence of said determined codebook vectors with word models representing words to be recognized.

19. A software tool for implementing on a computer a robust speech recognition system, said software tool comprising:

    - a software code portion for generating a noise-reduced signal spectrum by filtering a noisy speech input signal using a filter function;
    - a software code portion for generating a confidence vector from said filter function which indicates how strong a speech component was affected by noise before noise suppression;
    - a software code portion for generating a feature vector from said noise-reduced signal spectrum;
    - a software code portion for determining a codebook vector relating to said feature vector by using said confidence vector;
    - a software code portion for determining a recognition result by determining a best matching word model relating to said determined codebook vectors.

20. The software tool of claim 19, wherein said codebook vector having a minimum distance to feature vector U(T) is determined by a software code portion for selecting a codebook vector with least distance to said feature vector by comparing said feature vector with a set of codebook vectors under a metric modified by said confidence vector.

21. The software tool of claim 20, wherein said metric is modified by a software code portion by weighting components of said feature vector more affected by noise weaker then components less affected.

**22.** The software tool of one of the claims 20 or 21, further comprising a software code portion for calculating said distance by a formula:

$$\text{dist}(U(T),V(i),c(T)) = \sqrt{\frac{\sum_k (U_k(T) - V(i))^2 c_k(T)}{\sum_k c_k(T)}}\,.$$

**23.** The software tool of one of claims 19 to 22, wherein said confidence vector c(T) is generated by transforming said filter function F(f,T) generating said noise-reduced signal spectrum, and said software tool repeatedly carrying out:

- a software code portion for selecting a function set $h_k$;
- a software code portion for generating a component $c_k$(T) of said confidence vector by transforming said filter function F(f,T) with said function set $h_k$;
- a software code portion for selecting next parameter k;

and wherein said software tool further comprises:

- a software code portion for determining and outputting said confidence vector c(T).

**24.** The software tool of one of the claims 19 to 23, further comprising:

- a software code portion for generating said feature vector by using a deviation vector;
- a software code portion for updating said deviating vector by calculating deviation between said feature vector and said codebook vector.

**25.** A software tool for implementing on a computer a robust speech recognition system, said software tool comprising:

- a software code portion for generating a noise-reduced signal spectra from a noisy speech input signal;
- a software code portion for generating feature vectors from said noise-reduced signal spectra by using a deviation vector;
- a software code portion for determining codebook vectors relating to said feature vectors;
- a software code portion for updating said deviation vector by averaging deviations between said feature vectors and said relating codebook vectors;
- a software code portion for determining a recognition result by determining a best matching word model relating to said determined codebook vectors.

**26.** The software tool of claim 25, further comprising a software code portion for generating said feature vector in which first a feature vector is generated by not using said deviation vector and then this feature vector is multiplied with said deviation vector.

**27.** The software tool of claim 26, further comprising a software code portion in which the deviation vector is generated each time a new codebook vector is determined.

**28.** The software tool of one of claims 25 to 27, further comprising a software code portion for calculating said deviation vector d(T) by a formula:

d(T+1)=d(T) + (d(T)V(T)/U(T) - d(T))q;

wherein q is a time constant between zero and one.

**29.** The software tool of one of the claims 24 to 28, further comprising a software code portion in which said recognition result is determined by comparing said determined codebook vectors with word models representing words to be recognized.

30. A computer program product comprising computer program code which when executed on a computer enables said computer to carry out a method comprising:

- generating a noise-reduced signal spectra by filtering a noisy speech input signal;
- generating a confidence vector from said filter function which indicates how strong a speech component was affected by noise before the noise suppression;
- generating feature vectors from said noise-reduced signal spectra by using a deviation vector;
- determining codebook vectors relating to said feature vectors by using said confidence vector;
- updating said deviation vector by averaging deviations between said feature vectors and said relating codebook vectors;
- determining a recognition result by determining a best matching word model relating to a sequence of said determined codebook vectors.

31. A computer program comprising computer program code which when executed on a computer enables said computer to carry out a method according to one of claims 1 to 14.

32. A digital signal processing system (1300) comprising:

a processing unit and a storage unit;

- said processing unit generates in response to instructions stored in said storage unit a noise-reduced signal spectra by filtering a noisy speech input signal using a filter function;
- said processing unit generates in response to instructions stored in said storage unit a confidence vector (1341) from said filter function which indicates how strong a speech component was affected by noise before the noise suppression;
- said processing unit further generates in response to instructions stored in said storage unit feature vectors from said noise-reduced signal spectra using a deviation vector (1342);
- said processing unit further determines in response to instructions stored in said storage unit codebook vectors relating to said feature vectors from a set of codebook vectors stored in said storage unit by using said confidence vector;
- said processing unit further updates said deviation vector by averaging deviations between said feature vectors and said relating codebook vectors;
- said processing unit further determines in response to instructions stored in said storage unit a recognition result by determining a best matching word model relating to said determined codebook vectors from a set of word models stored in said storage unit.

33. The digital signal processing system (1300) of claim 32, further comprising a microphone (1310) and a sampling unit (1320) for receiving and preprocessing said noisy speech input signal.

34. The digital signal processing system (1300) of one of claims 32 or 33, in which said storage unit comprises:

- a volatile memory (1340) storing said instructions, said confidence vector (1341) and said deviation vector (1342);
- a first non-volatile memory (1350) storing said codebook vector set; and
- a second non-volatile memory (1360) storing said word models.

35. A digital signal processing system of one of claims 32 to 34, wherein said system is implemented in a digital signal processor or a customized integrated circuit.

**Patentansprüche**

1. Robustes Spracherkennungsverfahren umfassend:

- Erzeugen (100) eines geräuschreduzierten Signalspektrums durch Filtern eines geräuschbehafteten Spracheingangssignals unter Nutzung einer Filterfunktion;
- Erzeugen (110) eines Vertrauens-Vektors aus der Filterfunktion, wobei der Vertrauens-Vektor angibt, wie stark eine Sprachkomponente vor der Geräuschunterdrückung vom Geräusch beeinflußt war;

- Erzeugen (120) eines Merkmals-Vektors aus dem geräuschreduzierten Signalspektrum;
- Ermitteln (130) eines Codebuch-Vektors, welcher sich auf den Merkmals-Vektor bezieht, unter Verwendung des Vertrauens-Vektors;
- Ermitteln (140) eines Erkennungsergebnisses durch Ermitteln eines zu den ermittelten Codebuch-Vektoren zugehörigen am besten passenden Wortmodells.

2. Verfahren nach Anspruch 1, wobei der ermittelte Codebuch-Vektor der am besten passende Codebuch-Vektor ist, welcher einen minimalen Abstand zu dem Merkmals-Vektor hat.

3. Verfahren nach Anspruch 2, wobei der am besten passende Codebuch-Vektor ermittelt wird, indem ein Codebuch-Vektor $V(T)$ ausgewählt wird, welcher beim Vergleich des Merkmals-Vektors mit einem Satz von Codebuch-Vektoren V den kleinsten Abstand zu dem Merkmals-Vektor $U(T)$ unter einer Metrik aufweist, welche durch den Vertrauens-Vektor $c(T)$ modifiziert ist.

4. Verfahren nach Anspruch 3, wobei der Vertrauens-Vektor die zur Abstandsberechnung verwendete Metrik modifiziert, indem diejenigen Komponenten des Merkmals-Vektors, die stärker geräuschbehaftet sind, schwächer gewichtet sind als solche, die weniger geräuschbehaftet sind.

5. Verfahren nach einem der vorangegangenen Ansprüche, wobei der Vertrauens-Vektor $c(T)$ durch Transformation der Filterfunktion $F(f, T)$ ermittelt wird, die das geräuschreduzierte Signalspektrum erzeugt, und die Erzeugung des Vertrauens-Vektors umfaßt das wiederholte Ausführen von:

- Auswählen (111) einer Funktion $h_k$ aus einem Satz von Funktionen h;
- Erzeugen (112) einer Komponente $c_k(T)$ des Vertrauens-Vektors durch Falten der Filterfunktion $F(f, T)$ mit der Funktion $h_k$;
- Inkrementieren (114) von k;

und wobei das Verfahren weiterhin umfaßt:

- Ausgeben (113) des Vertrauens-Vektors $c(T)$.

6. Verfahren nach einem der vorangegangenen Ansprüche, wobei die Ermittlung eines Codebuch-Vektors $V(T)$ weiterhin umfaßt das wiederholte Ausführen von:

- Auswählen (131) einer Komponente $U_k(T)$ des Merkmals-Vektors $U(T)$ und einer Komponente $V_k(i)$ eines Codebuch-Vektors $V(i)$;
- Berechnen (132) der Differenz der Komponenten $U_k(T)$ und $V_k(i)$;
- Gewichten (133) der Differenz mit $c_k(T)$;
- Inkrementieren (135) von k; und wobei das Verfahren weiterhin umfaßt:

- Berechnen (134) eines Abstands des Codebuch-Vektors $V(i)$ aus den gewichteten Differenzen;
- Bestimmen (136) des Codebuch-Vektors $V(i)$ zum Codebuch-Vektor $V(T)$, wenn der Abstand von $V(i)$ kleiner als der Abstand von $V(T)$ ist;
- Auswählen (137) des nächsten $V(i)$;

und wobei das Verfahren weiterhin umfaßt:

- Ausgeben (138) des Codebuch-Vektors $V(T)$ als den am besten passenden Codebuch-Vektor.

7. Methode nach einem der vorangegangenen Ansprüche, wobei die Abstandsberechnung durch die Formel definiert ist:

$$\text{dist}(U(T),V(i),c(T)) = \sqrt{\frac{\sum_{k}(U_k(T)-V(i))^2 c_k(T)}{\sum_{k} c_k(T)}} \ .$$

**8.** Verfahren nach einem der vorangegangenen Ansprüche, weiterhin umfassend:

- Erzeugen (330) des Merkmals-Vektors unter Benutzung eines Abweichungs-Vektors;
- Aktualisieren (360) des Abweichungs-Vektors.

**9.** Robustes Spracherkennungsverfahren umfassend:

- Erzeugen (210) von geräuschreduzierten Signalspektren aus einem geräuschbehafteten Spracheingangssignal;
- Erzeugen (220) von Merkmals-Vektoren aus den geräuschreduzierten Signalspektren unter Verwendung eines Abweichungs-Vektors;
- Ermitteln (230) von zu dem Merkmals-Vektoren zugehörigen Codebuch-Vektoren;
- Aktualisieren (240) des Abweichungs-Vektors durch Mitteln der Abweichungen zwischen den Merkmals-Vektoren U(T) und den zugehörigen Codebuch-Vektoren V(T);
- Ermitteln (250) eines Erkennungsergebnisses durch Ermitteln eines zu den ermittelten Codebuch-Vektoren zugehörigen am besten passenden Wortmodells.

**10.** Verfahren nach Anspruch 9, wobei das Erzeugen (220) des Merkmals-Vektors umfaßt die wiederholte Ausführung von:

- Berechnen (251) einer Komponente $U_k(T)$ des Merkmals-Vektors durch Transformieren des geräuschreduzierten Signalspektrums A(f, T) mit einer Transformation $g_k$;
- Auswählen (252) einer Komponente $d_k(T)$ des Abweichungs-Vektors;
- Multiplizieren (253) der Merkmals-Vektor-Komponente $U_k(T)$ mit der Abweichungs-Vektor-Komponente $d_k(T)$;
- Inkrementieren (254) von k;

und wobei das Verfahren des weiteren umfaßt:

- Ausgeben (255) des Merkmals-Vektors U(T).

**11.** Verfahren nach Anspruch 10, wobei der Abweichungs-Vektor jedesmal aktualisiert wird, wenn ein neuer Codebuch-Vektor ermittelt wird.

**12.** Verfahren nach einem der Ansprüche 9 bis 11, wobei der Abweichungs-Vektor ermittelt wird durch:

- Berechnen (241) von U(T) unter Benutzung des aktuellen d(T);
- Berechnen (242) der Abweichung zwischen V(T) und U(T);
- Auswählen (243) einer Zeitkonstante q;
- Auswählen des aktuellen Abweichungs-Vektors d(T);
- Berechnen (244) eines neuen Abweichungs-Vektors d(T+1) aus d(T), der Abweichung zwischen V(T) und U(T), sowie der Zeitkonstanten q.

**13.** Verfahren nach Anspruch 12, wobei der Abweichungs-Vektor d(T) nach einer Formel berechnet wird:

d(T+1)=d(T) + (d(T)V(T)/U(T) - d(T))q;

wobei q einen Wert zwischen null und eins besitzt.

**14.** Verfahren nach einem der vorangegangenen Ansprüche, wobei das Erkennungsergebnis durch Vergleich einer Sequenz der ermittelten Codebuch-Vektoren mit zu erkennenden Worten repräsentierenden Wortmodellen ermittelt wird.

15. Robustes Spracherkennungssystem (400) umfassend:

- einen Geräuschunterdrücker (410) zum Erzeugen eines geräuschreduzierten Signalspektrums durch Filtern eines geräuschbehafteten Eingangssprachsignals unter Verwendung einer Filterfunktion;
- einen Vertrauens-Vektor-Generator (480) zum Erzeugen eines Vertrauens-Vektors aus der Filterfunktion, wobei der Vertrauens-Vektor angibt, wie stark eine Sprachkomponente vor der Geräuschunterdrückung vom Geräusch beeinflußt war;
- einen Merkmals-Vektor-Generator (420) zur Erzeugung eines Merkmals-Vektors aus dem geräuschreduzierten Signal-Spektrum;
- einen Merkmals-Komparator (430), der unter Benutzung des Vertrauens-Vektors einen Codebuch-Vektor als zum Merkmals-Vektor zugehörig bestimmt;
- eine Entscheidungs-Einheit (440), welche ein Erkennungsergebnis ermittelt, indem ein am besten passendes Wortmodell ermittelt wird, welches zu einer Sequenz der ermittelten Codebuch-Vektoren zugehörig ist.

16. Robustes Spracherkennungssystem (500) umfassend:

- einen Geräuschunterdrücker (410) zum Erzeugen von geräuschreduzierten Signalspektren aus einem geräuschbehafteten Eingangssignal;
- einen Merkmals-Vektor-Generator (520) zum Erzeugen von Merkmals-Vektoren aus den geräuschreduzierten Signal-Spektren unter Verwendung eines Abweichungs-Vektors;
- einen Merkmals-Komparator (530), der den Merkmals-Vektoren zugehörige Codebuch-Vektoren bestimmt;
- einen Abweichungs-Vektor-Generator (570) zum Erzeugen des Abweichungs-Vektors durch Mitteln der Abweichungen zwischen den Merkmals-Vektoren und den zugehörigen Codebuch-Vektoren;
- eine Entscheidungseinheit (440), welche ein Erkennungsergebnis ermittelt, indem ein am besten passendes Wortmodell ermittelt wird, welches zu einer Sequenz der ermittelten Codebuch-Vektoren zugehörig ist.

17. System nach einem der Ansprüche 15 oder 16, wobei der Merkmals-Komparator (430, 530, 940) mindestens einen Codebuch-Vektor mit minimalem Abstand zum Merkmals-Vektor ausgibt, indem der Merkmals-Vektor mit Codebuch-Vektoren unter einer durch den Vertrauens-Vektor modifizierten Metrik verglichen wird.

18. System nach einem der Ansprüche 15 bis 17, wobei die Entscheidungseinheit (440, 950) ein Erkennungsergebnis ermittelt, indem eine Sequenz der ermittelten Codebuch-Vektoren mit Wortmodellen verglichen wird, welche zu erkennende Worte repräsentieren.

19. Ein Softwarewerkzeug zur Implementierung eines robusten Spracherkennungssystems auf einem Computer, wobei das Softwarewerkzeug umfaßt:

- einen Softwarecodeabschnitt zum Erzeugen eines geräuschreduzierten Signalspektrums durch Filtern eines geräuschbehafteten Spracheingangssignals unter Nutzung einer Filterfunktion;
- einen Softwarecodeabschnitt zum Erzeugen eines Vertrauens-Vektors aus der Filterfunktion, wobei der Vertrauens-Vektor angibt, wie stark eine Sprachkomponente vor der Geräuschunterdrückung vom Geräusch beeinflußt war;
- einen Softwarecodeabschnitt zum Erzeugen eines Merkmals-Vektors aus dem geräuschreduzierten Signalspektrum;
- einen Softwarecodeabschnitt zum Ermitteln eines Codebuch-Vektors, welcher sich auf den Merkmals-Vektor bezieht, unter Verwendung des Vertrauens-Vektors;
- einen Softwarecodeabschnitt zum Ermitteln eines Erkennungsergebnisses durch Ermitteln eines zu den ermittelten Codebuch-Vektoren zugehörigen am besten passenden Wortmodells.

20. Das Softwarewerkzeug nach Anspruch 19, wobei der Codebuch-Vektor, der einen minimalen Abstand zum Merkmals-Vektor U(T) aufweist, durch einen Softwarecodeabschnitt zum Auswählen eines Codebuch-Vektors mit minimalem Abstand zu dem Merkmals-Vektor durch Vergleich des Merkmals-Vektors mit einem Satz von Codebuch-Vektoren unter einer Metrik, die durch den Vertrauens-Vektor modifiziert ist, ermittelt wird.

21. Das Softwarewerkzeug nach Anspruch 20, wobei die Metrik von einem Softwarecodeabschnitt, in dem diejenigen Komponenten des Merkmals-Vektors, die stärken geräuschbehaftet sind, schwächer gewichtet sind als solche, die weniger geräuschbehaftet sind, modifiziert wird.

**22.** Das Softwarewerkzeug nach einem der Ansprüche 20 oder 21, weiterhin umfassend einen Softwarecodeabschnitt zum Berechnen des Abstandes gemäß einer Formel:

$$\mathrm{dist}(U(T),V(i),c(T)) = \sqrt{\frac{\sum_{k}(U_k(T) - V(i))^2 c_k(T)}{\sum_{k} c_k(T)}} \; .$$

**23.** Das Softwarewerkzeug gemäß einem der Ansprüche 19 bis 22, wobei der Vertrauensvektor c(T) durch Transformation der Filterfunktion F(f, T) erzeugt wird, die das geräuschreduzierte Signalspektrum erzeugt, und das Softwarewerkzeug umfaßt das wiederholte Ausführen:

- einen Softwarecodeabschnitt zum Auswählen einer Funktion $h_k$;
- einen Softwarecodeabschnitt zum Erzeugen einer Komponente $c_k(T)$ des Vertrauens-Vektor durch Falten der Filterfunktion F(f, T) mit der Funktion $h_k$;
- einen Softwarecodeabschnitt zum Auswählen des nächsten Parameters k;

und wobei das Softwarewerkzeug weiterhin umfaßt:

- einen Softwarecodeabschnitt zum Ermitteln und Ausgeben des Vertrauens-Vektors c(T).

**24.** Das Softwarewerkzeug gemäß einem der Ansprüche 19 bis 23, weiterhin umfassend:

- einen Softwarecodeabschnitt zum Ermitteln des Merkmals-Vektors unter Verwendung eines Abweichungs-Vektors;
- einen Softwarecodeabschnitt zum Aktualisieren des Abweichungs-Vektors durch Berechnen der Abweichung zwischen dem Merkmals-Vektor und dem Codebuch-Vektor.

**25.** Ein Softwarewerkzeug zum Implementieren eines robusten Spracherkennungssystems auf einem Computer, wobei das Softwarewerkzeug umfaßt:

- einen Softwarecodeabschnitt zum Erzeugen von geräuschreduzierten Signalspektren aus einem geräuschbehafteten Spracheingangssignal;
- einen Softwarecodeabschnitt zum Erzeugen von Merkmals-Vektoren aus den geräuschreduzierten Signalspektren unter Verwendung eines Abweichungs-Vektors;
- einen Softwarecodeabschnitt zum Ermitteln von zu den Merkmals-Vektoren zugehörigen Codebuch-Vektoren;
- einen Softwarecodeabschnitt zum Aktualisieren des Abweichungs-Vektors durch Mitteln der Abweichungen zwischen den Merkmals-Vektoren und den zugehörigen Codebuch-Vektoren;
- einen Softwarecodeabschnitt zum Ermitteln eines Erkennungsergebnisses durch Ermitteln eines zu den ermittelten Codebuch-Vektoren zugehörigen am besten passenden Wortmodells.

**26.** Das Softwarewerkzeug nach Anspruch 25, weiterhin umfassend einen Softwarecodeabschnitt zum Erzeugen des Merkmals-Vektors, wobei zunächst ein Merkmals-Vektor ohne Verwendung des Abweichungs-Vektors erzeugt wird und dann dieser Merkmals-Vektor mit dem Abweichungs-Vektor multipliziert wird.

**27.** Das Softwarewerkzeug nach Anspruch 26, weiterhin umfassend einen Softwarecodeabschnitt, in dem der Abweichungs-Vektor immer dann erzeugt wird, wenn ein neuer Codebuch-Vektor ermittelt wird.

**28.** Das Softwarewerkzeug nach einem der Ansprüche 25 bis 27, weiterhin umfassend einen Softwarecodeabschnitt zum Berechnen des Abweichungs-Vektors d(T) durch eine Formel:

**EP 1 327 976 B1**

$$d(T+1) = d(T) + ( d(T)V(T) / U(T) - d(T))q;$$

wobei q eine Zeitkonstante ist, die einen Wert zwischen 0 und 1 aufweist.

29. Das Softwarewerkzeug nach einem der Ansprüche 24 bis 28, weiterhin umfassend einen Softwarecodeabschnitt, in dem das Erkennungsergebnis durch Vergleichen der ermittelten Codebuch-Vektoren mit zu erkennenden Worten repräsentierenden Wortmodellen ermittelt wird.

30. Ein Computerprogrammprodukt umfassend Computerprogrammcode, der, wenn er auf einem Computer ausgeführt wird, den Computer veranlaßt, ein Verfahren auszuführen, umfassend:

   - Erzeugen von geräuschreduzierten Signal-Spektren durch Filtern eines geräuschbehafteten Spracheingangssignals;
   - Erzeugen eines Vertrauens-Vektors aus der Filterfunktion, wobei der Vertrauens-Vektor angibt, wie stark eine Sprachkomponente vor der Geräuschunterdrückung vom Geräusch beeinflußt war;
   - Erzeugen von Merkmals-Vektoren aus den geräuschreduzierten Signal-Spektren unter Verwendung eines Abweichungs-Vektors;
   - Ermitteln von zu den Merkmals-Vektoren zugehörigen Codebuch-Vektoren unter Verwendung des Vertrauens-Vektors;
   - Aktualisieren des Abweichungs-Vektors durch Mitteln der Abweichungen zwischen den Merkmals-Vektoren und den zugehörigen Codebuch-Vektoren;
   - Ermitteln eines Erkennungsergebnisses durch Ermitteln eines zu einer Sequenz der ermittelten Codebuch-Vektoren zugehörigen am besten passenden Wortmodells.

31. Ein Computerprogrammprodukt umfassend Computerprogrammcode, der einen Computer veranlaßt, ein Verfahren gemäß einem der Ansprüche 1 bis 14 auszuführen, wenn der Computerprogrammcode auf dem Computer ausgeführt wird.

32. Ein digitales Signalverarbeitungssystem (1300) umfassend:

   - eine Verarbeitungseinheit und eine Speichereinheit;
   - die Verarbeitungseinheit erzeugt als Antwort auf in der Speichereinheit gespeicherte Befehle geräuschreduzierte Signalspektren durch Filtern eines geräuschbehafteten Spracheingangssigals unter Verwendung einer Filterfunktion;
   - die Verarbeitungseinheit erzeugt als Antwort auf in der Speichereinheit gespeicherte Befehle einen Vertrauens-Vektor (1341) aus der Filterfunktion, wobei der Vertrauens-Vektor angibt, wie stark eine Sprachkomponente vor der Geräuschunterdrückung vom Geräusch beeinflußt war;
   - die Verarbeitungseinheit erzeugt weiterhin als Antwort auf in der Speichereinheit gespeicherte Befehle Merkmals-Vektoren aus den geräuschreduzierten Signalspektren unter Verwendung eines Abweichungs-Vektors (1342); die Verarbeitungseinheit ermittelt weiterhin als Antwort auf in der Speichereinheit gespeicherte Befehle zu den Merkmals-Vektoren zugehörige Codebuch-Vektoren aus einem in der Speichereinheit gespeicherten Satz von Codebuch-Vektoren unter Verwendung des Vertrauens-Vektors;
   - die Verarbeitungseinheit aktualisiert weiterhin den Abweichungs-Vektor durch Mitteln von Abweichungen zwischen den Merkmals-Vektoren und den zugehörigen Codebuch-Vektoren;
   - die Verarbeitungseinheit ermittelt weiterhin als Antwort auf in der Speichereinheit gespeicherte Befehle ein Erkennungsergebnis durch Ermitteln eines zu den ermittelten Codebuch-Vektoren zugehörigen, am besten passenden Wortmodells aus einem in der Speichereinheit gespeicherten Satz von Wortmodellen.

33. Das digitale Signalverarbeitungssystem (1300) nach Anspruch 32, weiterhin umfassend ein Mikrophon (1310) und eine Abtasteinheit (1320) zum Empfangen und Vorverarbeiten des geräuschbehaften Spracheingangssignals.

34. Das digitale Signalverarbeitungssystem (1300) nach einem der Ansprüche 32 oder 33, in dem die Speichereinheit umfaßt:

   - einen flüchtigen Speicher (1340) speichernd die Befehle, den Vertrauens-Vektor (1341) und den Abweichungs-Vektor (1342);
   - einen ersten nichtflüchtigen Speicher (1350) zum Speichern des Codebuch-Vektor-Satzes; und

21

- einen zweiten nichtflüchtigen Speicher (1360) speichernd die Wortmodelle.

**35.** Ein digitales Signalverarbeitungssystem (1300) nach einem der Ansprüche 32 bis 34, wobei das System in einem digitalen Signalprozessor oder einem kundenspezifischen integrierten Schaltkreis implementiert ist.

**Revendications**

**1.** Procédé robuste de reconnaissance de la parole comportant les étapes consistant à :

- générer (100) un spectre de signal à bruit réduit en filtrant un signal d'entrée vocal chargé de bruit en utilisant une fonction de filtrage,
- générer (110) un vecteur de confiance à partir de ladite fonction de filtrage qui indique la force avec laquelle une composante vocale était affectée par le bruit avant l'atténuation du bruit,
- générer (120) un vecteur de caractéristique à partir dudit spectre de signal à bruit réduit,
- déterminer (130) un vecteur de dictionnaire se rapportant audit vecteur de caractéristique en utilisant ledit vecteur de confiance,
- déterminer (140) un résultat de reconnaissance en déterminant un modèle de mots le mieux adapté se rapportant aux vecteurs de dictionnaire déterminés

**2.** Procédé selon la revendication 1, dans lequel ledit vecteur de dictionnaire déterminé est le vecteur de dictionnaire le mieux adapté ayant une distance minimale par rapport audit vecteur de caractéristique.

**3.** Procédé selon la revendication 2, dans lequel ledit vecteur de dictionnaire le mieux adapté est déterminé en sélectionnant un vecteur de dictionnaire V(T) ayant la plus petite distance par rapport audit vecteur de caractéristique U(T) en comparant ledit vecteur de caractéristique à un ensemble de vecteurs de dictionnaire V sous une métrique modifiée par ledit vecteur de confiance c(T).

**4.** Procédé selon la revendication 3, dans lequel ledit vecteur de confiance modifie la métrique utilisée pour le calcul de distance de manière à ce que les composantes dudit vecteur de caractéristique plus affectées par le bruit soient pondérées plus faiblement que les composantes moins affectées.

**5.** Procédé selon l'une quelconque des revendications précédentes, dans lequel ledit vecteur de confiance c(T) est déterminé en transformant ladite fonction de filtrage F(f,T) générant ledit spectre de signal à bruit réduit, et ladite génération dudit vecteur de confiance comporte l'exécution d'une manière répétée des étapes consistant à :

- sélectionner (111) une fonction $h_k$ parmi un ensemble de fonctions h,
- générer (112) une composante $c_k(T)$ dudit vecteur de confiance en effectuant une convolution de ladite fonction de filtrage F(f,T) avec ladite fonction $h_k$,
- incrémenter (114) k,

et où ledit procédé comporte en outre l'étape consistant à :

- délivrer en sortie (113) ledit vecteur de confiance c(T).

**6.** Procédé selon l'une quelconque des revendications précédentes, dans lequel ladite détermination d'un vecteur de dictionnaire V(T) comporte en outre l'exécution d'une manière répétée des étapes consistant à :

- sélectionner (131) une composante $U_k(T)$ dudit vecteur de caractéristique U(T) et une composante $V_k(i)$ d'un vecteur de dictionnaire V(i),
- calculer (132) la différence entre les composantes $U_k(T)$ et $V_k(i)$,
- pondérer (133) ladite différence avec $c_k(T)$,
- incrémenter (135) k,

et où ledit procédé comporte en outre les étapes consistants à :

- calculer (134) une distance du vecteur de dictionnaire V(i) d'après lesdites différences pondérées,
- établir (136) le vecteur de dictionnaire V(i) en tant que vecteur de dictionnaire V(T) si la distance de V(i) est plus petite que la distance de V(T),

- sélectionner (137) le vecteur V(i) suivant, et où ledit procédé comporte en outre l'étape consistant à :

- délivrer en sortie (138) ledit vecteur de dictionnaire V(T) comme étant le vecteur de dictionnaire le mieux adapté.

**7.** Procédé selon l'une quelconque des revendications précédentes, dans lequel le calcul de distance est défini par une formule :

$$\text{dist}(\mathbf{U(T)},\mathbf{V(i)},\mathbf{C(T)}) = \sqrt{\frac{\sum_k (U_k(T) - V(i))^2 c_k(T)}{\sum_k c_k(T)}} \; .$$

**8.** Procédé selon l'une quelconque des revendications précédentes, comportant en outre les étapes consistant à :

- générer (330) ledit vecteur de caractéristique en utilisant un vecteur d'écart,
- mettre à jour (360) ledit vecteur d'écart.

**9.** Procédé robuste de reconnaissance de la parole comportant les étapes consistant à :

- générer (210) des spectres de signal à bruit réduit à partir d'un signal d'entrée vocal chargé de bruit,
- générer (220) des vecteurs de caractéristique à partir desdits spectres de signal à bruit réduit en utilisant un vecteur d'écart,
- déterminer (230) des vecteurs de dictionnaire se rapport auxdits vecteurs de caractéristique,
- mettre à jour (240) ledit vecteur d'écart en mettant en moyenne les écarts entre lesdits vecteurs de caractéristique U(T) et lesdits vecteurs de dictionnaire relatifs V(T),
- déterminer (250) un résultat de reconnaissance en déterminant un modèle de mots le mieux adapté se rapportant auxdits vecteurs de dictionnaire déterminés.

**10.** Procédé selon la revendication 9, dans lequel ladite génération (220) dudit vecteur de caractéristique comporte en outre l'exécution d'une manière répétée des étapes consistant à :

- calculer (251) une composante $U_k(T)$ dudit vecteur de caractéristique en transformant ledit spectre de signal à bruit réduit A(f,T) à l'aide d'une transformation $g_k$,
- sélectionner (252) une composante $d_k(T)$ dudit vecteur d'écart,
- multiplier (253) ladite composante de vecteur de caractéristique $U_k(T)$ par ladite composante de vecteur d'écart $d_k(T)$,
- incrémenter (254) k, et où ledit procédé comporte en outre l'étape consistant à :

- délivrer en sortie (255) ledit vecteur de caractéristique U(T).

**11.** Procédé selon la revendication 10, dans lequel le vecteur d'écart est mis à jour à chaque fois qu'un nouveau vecteur de dictionnaire est déterminé.

**12.** Procédé selon l'une quelconque des revendications 9 à 11, dans lequel ledit vecteur d'écart est déterminé par les étapes consistant à :

- calculer (241) U(T) en utilisant un vecteur courant d(T),
- calculer (242) l'écart entre V(T) et U(T),
- sélectionner (243) une constante de temps q,
- sélectionner un vecteur d'écart courant d(T),
- calculer (244) un nouveau vecteur d'écart d(T+1) à partir de d(T), l'écart entre V(T) et U(T) et la constante de temps q.

**13.** Procédé selon la revendication 12, dans lequel ledit vecteur d'écart d(T) est calculé par une formule :

$$d(T+1) = d(T) + (d(T)V(T)/U(T) - d(T))q,$$

où ladite constante q est une valeur comprise entre zéro et un.

14. Procédé selon l'une quelconque des revendications précédentes, dans lequel ledit résultat de reconnaissance est déterminé en comparant une séquence desdits vecteurs de dictionnaire déterminés à des modèles de mots représentant des mots à reconnaître.

15. Système robuste de reconnaissance de la parole (400) comportant :

 - un atténuateur de bruit (410) pour générer un spectre de signal à bruit réduit en filtrant un signal d'entrée chargé de bruit en utilisant une fonction de filtrage,
 - un générateur de vecteur de confiance (480) pour générer un vecteur de confiance à partir de ladite fonction de filtrage qui indique la force avec laquelle une composante vocale était affectée par le bruit avant l'atténuation du bruit,
 - un générateur de vecteur de caractéristique (420) pour générer un vecteur de caractéristique à partir dudit spectre de signal à bruit réduit,
 - un comparateur de caractéristique (430) déterminant un vecteur de dictionnaire se rapportant audit vecteur de caractéristique en utilisant ledit vecteur de confiance,
 - une unité de décision (440) déterminant un résultat de reconnaissance en déterminant un modèle de mots le mieux adapté se rapportant à une séquence desdits vecteurs de dictionnaire déterminés.

16. Système robuste de reconnaissance de la parole (500) comportant :

 - - un atténuateur de bruit (410) pour générer des spectres de signal à bruit réduit à partir d'un signal d'entrée chargé de bruit,
 - un générateur de vecteurs de caractéristique (520) pour générer des vecteurs de caractéristique à partir desdits spectres de signal à bruit réduit en utilisant un vecteur d'écart,
 - un comparateur de caractéristique (530) déterminant des vecteurs de dictionnaire se rapportant auxdits vecteurs de caractéristique,
 - un générateur de vecteur d'écart (570) pour générer ledit vecteur d'écart en mettant en moyenne les écarts entre lesdits vecteurs de caractéristique et lesdits vecteurs de dictionnaire relatifs,
 - une unité de décision (440) déterminant un résultat de reconnaissance en déterminant un modèle de mots le mieux adapté se rapportant à une séquence desdits vecteurs de dictionnaire déterminés.

17. Système selon l'une quelconque des revendications 15 ou 16, dans lequel ledit comparateur de caractéristique (430, 530, 940) délivre en sortie au moins un vecteur de dictionnaire ayant la plus petite distance par rapport audit vecteur de caractéristique en comparant ledit vecteur de caractéristique à des vecteurs de dictionnaire sous une métrique modifiée par ledit vecteur de confiance.

18. Système selon l'une quelconque des revendications 15 à 17, dans lequel ladite unité de décision (440, 950) détermine le résultat de reconnaissance en comparant une séquence desdits vecteurs de dictionnaire déterminés à des modèles de mots représentant des mots à reconnaître.

19. Outil logiciel pour implémenter sur un ordinateur un système robuste de reconnaissance de la parole, ledit outil logiciel comportant :

 - une partie de code logiciel pour générer un spectre de signal à bruit réduit en filtrant un signal d'entrée vocal chargé de bruit en utilisant une fonction de filtrage,
 - une partie de code logiciel pour générer un vecteur de confiance à partir de ladite fonction de filtrage qui indique la force avec laquelle une composante vocale était affectée par le bruit avant l'atténuation du bruit,
 - une partie de code logiciel pour générer un vecteur de caractéristique à partir dudit spectre de signal à bruit réduit,
 - une partie de code logiciel pour déterminer un vecteur de dictionnaire se rapportant audit vecteur de caractéristique en utilisant ledit vecteur de confiance,
 - une partie de code logiciel pour déterminer un résultat de reconnaissance en déterminant un modèle de mots le mieux adapté se rapportant auxdits vecteurs de dictionnaire déterminés.

**20.** Outil logiciel selon la revendication 19, dans lequel ledit vecteur de dictionnaire ayant une distance minimale jusqu'au vecteur de caractéristique U(T) est déterminé par une partie de code logiciel pour sélectionner un vecteur de dictionnaire ayant la plus petite distance par rapport audit vecteur de caractéristique en comparant ledit vecteur de caractéristique à un ensemble de vecteurs de dictionnaire sous une métrique modifiée par ledit vecteur de confiance.

**21.** Outil logiciel selon la revendication 20, dans lequel ladite métrique est modifiée par une partie de code logiciel en pondérant plus faiblement les composantes dudit vecteur de caractéristique plus affectées par le bruit que les composantes moins affectées.

**22.** Outil logiciel selon l'une quelconque des revendications 20 ou 21, comportant en outre une partie de code logiciel pour calculer ladite distance par une formule :

$$\mathbf{dist(U(T), V(i), c(T))} = \sqrt{\frac{\sum_k (U_k(T) - V(i))^2 c_k(T)}{\sum_k c_k(T)}}.$$

**23.** Outil logiciel selon l'une des revendications 19 à 22, dans lequel ledit vecteur de confiance c(T) est généré en transformant ladite fonction de filtrage F(f,T) générant ledit spectre de signal à bruit réduit, et ledit outil logiciel exécutant d'une manière répétée :

- une partie de code logiciel pour sélectionner une fonction $h_k$,
- une partie de code logiciel pour générer une composante $c_k$ (T) dudit vecteur de confiance en effectuant une convolution de ladite fonction de filtrage F (f, T) avec ladite fonction $h_k$,
- une partie de code logiciel pour sélectionner le paramètre k suivant,

et où ledit outil logiciel comporte en outre :

- une partie de code logiciel pour déterminer et délivrer en sortie ledit vecteur de confiance c(T).

**24.** Outil logiciel selon l'une quelconque des revendications 19 à 23, comportant en outre :

- une partie de code logiciel pour générer ledit vecteur de caractéristique en utilisant un vecteur d'écart,
- une partie de code logiciel pour mettre à jour ledit vecteur d'écart en calculant l'écart entre ledit vecteur de caractéristique et ledit vecteur de dictionnaire.

**25.** Outil logiciel pour implémenter sur un ordinateur un système robuste de reconnaissance de la parole, ledit outil logiciel comportant :

- une partie de code logiciel pour générer des spectres de signal à bruit réduit à partir d'un signal d'entrée vocal chargé de bruit,
- une partie de code logiciel pour générer des vecteurs de caractéristique à partir desdits spectres de signal à bruit réduit en utilisant un vecteur d'écart,
- une partie de code logiciel pour déterminer des vecteurs de dictionnaire se rapportant auxdits vecteurs de caractéristique,
- une partie de code logiciel pour mettre à jour ledit vecteur d'écart en mettant en moyenne les écarts entre lesdits vecteurs de caractéristique et lesdits vecteurs de dictionnaire relatifs,
- une partie de code logiciel pour déterminer un résultat de reconnaissance en déterminant un modèle de mots le mieux adapté se rapportant auxdits vecteurs de dictionnaire déterminés.

**26.** Outil logiciel selon la revendication 25, comportant en outre une partie de code logiciel pour générer ledit vecteur de caractéristique dans laquelle tout d'abord un vecteur de caractéristique est généré en n'utilisant pas ledit vecteur d'écart et ensuite ce vecteur de caractéristique est multiplié par ledit vecteur d'écart.

**27.** Outil logiciel selon la revendication 26, comportant en outre une partie de code logiciel dans laquelle le vecteur d'écart est généré à chaque fois qu'un nouveau vecteur de dictionnaire est déterminé.

28. Outil logiciel selon l'une quelconque des revendications 25 à 27, comportant en outre une partie de code logiciel pour calculer ledit vecteur d'écart d(T) par une formule :

$$d(T+1) = d(T) + (d(T)V(T)/U(T) - d(T))q,$$

où q est une constante de temps comprise entre zéro et un.

29. Outil logiciel selon l'une quelconque des revendications 24 à 28, comportant en outre une partie de code logiciel dans laquelle ledit résultat de reconnaissance est déterminé en comparant lesdits vecteurs de dictionnaire déterminés à des modèles de mots représentant des mots à reconnaître.

30. Produit de programme informatique comportant un code de programme informatique qui, lorsque exécuté sur un ordinateur, permet audit ordinateur d'exécuter un procédé comportant les étapes consistant à :

- générer des spectres de signal à bruit réduit en filtrant un signal d'entrée vocal chargé de bruit,
- générer un vecteur de confiance à partir de ladite fonction de filtrage qui indique la force avec laquelle une composante vocale était affectée par le bruit avant l'atténuation du bruit,
- générer des vecteurs de caractéristique à partir desdits spectres de signal à bruit réduit en utilisant un vecteur d'écart,
- déterminer des vecteurs de dictionnaire se rapportant auxdits vecteurs de caractéristique en utilisant ledit vecteur de confiance,
- mettre à jour ledit vecteur d'écart en mettant en moyenne les écarts entre lesdits vecteurs de caractéristique et lesdits vecteurs de dictionnaire relatifs,
- déterminer un résultat de reconnaissance en déterminant un modèle de mots le mieux adapté se rapportant à une séquence desdits vecteurs de dictionnaire déterminé.

31. Programme informatique comportant un code de programme informatique qui, lorsque exécuté sur un ordinateur, permet audit ordinateur d'exécuter un procédé selon l'une quelconque des revendications 1 à 14.

32. Système de traitement de signal numérique (1300) comportant :

une unité de traitement et une unité de mémorisation,

- ladite unité de traitement génère, en réponse à des instructions mémorisées dans ladite unité de mémorisation, des spectres de signal à bruit réduit en filtrant un signal d'entrée vocal chargé de bruit en utilisant une fonction de filtrage,
- ladite unité de traitement génère, en réponse à des instructions mémorisées dans ladite unité de mémorisation, un vecteur de confiance (1341) à partir de ladite fonction de filtrage qui indique la force avec laquelle une composante vocale était affectée par le bruit avant l'atténuation du bruit,
- ladite unité de traitement génère en outre, en réponse à des instructions mémorisées dans ladite unité de mémorisation, des vecteurs de caractéristique à partir desdits spectres de signal à bruit réduit en utilisant un vecteur d'écart (1342),
- ladite unité de traitement détermine en outre, en réponse à des instructions mémorisées dans ladite unité de mémorisation, des vecteurs de dictionnaire se rapportant auxdits vecteurs de caractéristique à partir d'un ensemble de vecteurs de dictionnaire mémorisés dans ladite unité de mémorisation en utilisant ledit vecteur de confiance,
- ladite unité de traitement met à jour en outre ledit vecteur d'écart en mettant en moyenne les écarts entre lesdits vecteurs de caractéristique et lesdits vecteurs de dictionnaire relatifs,
- ladite unité de traitement détermine en outre, en réponse à des instructions mémorisées dans ladite unité de mémorisation, un résultat de reconnaissance en déterminant un modèle de mots le mieux adapté se rapportant auxdits vecteurs de dictionnaire déterminés parmi un ensemble de modèles de mots mémorisés dans ladite unité de mémorisation.

33. Système de traitement de signal numérique (1300) selon la revendication 32, comportant en outre un microphone (1310) et une unité d'échantillonnage (1320) pour recevoir et prétraiter ledit signal d'entrée vocal chargé de bruit.

**34.** Système de traitement de signal numérique (1300) selon l'une quelconque des revendications 32 ou 33, dans lequel ladite unité de mémorisation comporte :

- une mémoire volatile (1340) mémorisant lesdites instructions, ledit vecteur de confiance (1341) et ledit vecteur d'écart (1342),
- une première mémoire non-volatile (1350) mémorisant ledit ensemble de vecteurs de dictionnaire, et
- une seconde mémoire non-volatile (1360) mémorisant lesdits modèles de mots.

**35.** Système de traitement de signal numérique selon l'une quelconque des revendications 32 à 34, dans lequel ledit système est implémenté dans un processeur de signal numérique ou un circuit intégré personnalisé.

**Fig. 1**

EP 1 327 976 B1

Noisy
speech
input
signal

→

**Noise suppressor** 410

**Confidence vector generator** 480

**Feature vector generator** 420

**Feature comparator** 430

**Decision unit** 440

**Code book vector set** 450

**Word models** 460

Recognition result

400

**Fig. 2**

**Fig. 3**

Generate noise-reduced signal spectrum ⟋⟍—100

Generate confidence vector ⟋⟍—110

Generate feature vector ⟋⟍—120

Determine code book vector ⟋⟍—130

Determine recognition result ⟋⟍—140

**Fig. 4**

**Fig. 5**

U(T)

↓

Initialize k

137

Select next V(i)

Select $U_k(T)$ and $V_k(i)$ ——131

135 —— Increment k

Calculate difference between $U_k(T)$ and $V_k(i)$ ——132

Weight difference with $c_k(T)$ ——133

Calculate distance from weighted differences ——134

Set V(T) = V(i) if distance smaller than former least distance ——136

Output V(T) ——138

**Fig. 6**

.

Generate noise-reduced
signal spectrum ⟩—210

Generate feature vector
by using deviation vector ⟩—220

Determine best matching
code book vector ⟩—230

Update deviation vector ⟩—240

Determine recognition result ⟩—250

## Fig. 7

Calculate U(T) by using d(T) — 241

Calculate deviation between V(T) and U(T) — 242

Select time constant q — 243

Calculate new d(T+1) from d(T), deviation between V(T) and U(T) and q — 244

**Fig. 8**

Initialize k —256

Calculate $U_k(T)$ from $A(f, T)$ by transformation $g_k$ —251

254 — Increment k

Select $d_k(T)$ —252

Multiply $U_k(T)$ with $d_k(T)$ —253

Output U(T) —255

**Fig. 9**

Get next frame of
noisy speech signal ⌇—310

Generate noise reduced signal
spectrum A(f,T) and filter ⌇—320
function F(f, T)

A(f,T)   F(f,T)

Generate feature vector
U(T) by using deviation ⌇—330
vetor d(T)

Generate confidence
vector c(T) ⌇—340

Determine best matching codebook vector
V(T) using confidence vector c(T) ⌇—350

Update deviation vector
d(T) ⌇—360

Compare codebook
vectors V(T) with word
models and determine ⌇—370
recognition result

**Fig. 10**

noisy speech signal

**Fig. 11: prior art**

Noisy speech signal

X(f,T)  Signal spectrum

X(f,T)

F(f,T)  Filter function

F(f,T)

A(f,T)=X(f,T)F(f,T))

Noise-reduce signal spectrum

**Fig. 12: prior art**

Noisy speech signal spectrum

Fig. 13: prior art

Noisy speech input signal

**Fig. 14**

noisy speech signal

## Fig. 15

Noise reduced signal spectrum A(f,T)

$g_k(f)$

k: 1  2  3  4  5

f

$$U_k(T) = \int A(f,T) g_k(f) df$$

Feature vector

## Fig. 16a: prior art

Noise reduced signal spectrum A(f, T)

Deviation vector d(T)

$g_k(f) d_k(T)$

k: 1  2  3  4  5

f

$$U_k(T) = d_k(T) \int A(f,T) g_k(f) df$$

Feature vector U(T)

## Fig. 16b

Feature vector U(T)    Confidence vector c(T)

1110

U(T)

$$\text{dist}(U(T),V,c(T)) = \sqrt{\frac{\sum_{k}(U_k(T)-V_k)^2 c_k(T)}{\sum_{k} c_k(T)}}$$

1120

V(T): codebook vector with least dist. to U(T)

Codebook vector set

output: V(T)

Codebook vector V(T)

1130

**Fig. 17**

Feature vector U(T)    Codebook vector V(T)

1210

$$D(T+1)=d(T)+(d(T)V(T)/U(T)-d(T))q$$

d(T)

1220

Deviation vector d(T+1)

1230

**Fig. 18**